# EUROPEAN PATENT APPLICATION

(11) **EP 4 475 610 A1**
(43) Date of publication of application: **11.12.2024**
(21) Application number: 22933219.2
(22) Date of filing: 31.12.2022
(51) Int. Cl.: H04W 72/04

(54) **COMMUNICATION METHOD AND APPARATUS**

(30) Priority: 23.03.2022 CN 202210295725
(71) Applicant: Huawei Technologies Co., Ltd., Shenzhen, Guangdong 518129 (CN)
(72) Inventor: GAO, Guojuan, Shenzhen, Guangdong 518129 (CN); ZHOU, Han, Shenzhen, Guangdong 518129 (CN); LI, Hancheng, Shenzhen, Guangdong 518129 (CN); ZHOU, Kai, Shenzhen, Guangdong 518129 (CN)
(74) Representative: Pfenning, Meinig & Partner mbB
(86) International application number: PCT/CN2022/144417
(87) International publication number: WO 2023/179172

(57) **Abstract**

This application provides a communication method and apparatus, to resolve a problem of a high air interface transmission delay, and may be applied to fields such as a 4G system, a 5G system, and a future communication system like a 6G system. The method includes: A communication device determines a time offset value based on scheduling and orchestration information and time of arrival, and sends the time offset value to an application network element. The scheduling and orchestration information indicates a scheduling moment, the time of arrival indicates a moment at which a first data packet in a service flow arrives at the communication device, and the time offset value is a difference between the moment at which the first data packet arrives at the communication device and the scheduling moment.

## Description

This application claims priority to Chinese Patent Application No. 202210295725.2, filed with the China National Intellectual Property Administration on March 23, 2022 and entitled "COMMUNICATION METHOD AND APPARATUS", which is incorporated herein by reference in its entirety.

### TECHNICAL FIELD

This application relates to the communication field, and in particular, to a communication method and apparatus.

### BACKGROUND

In the industrial field, a large quantity of industrial devices (for example, a programmable logic controller (programmable logic controller, PLC) or an input/output (input/output, I/O) device) have a network connection requirement. For example, the industrial device may access a network via a terminal device or a gateway. However, in an existing process of interaction between the industrial device and the network, an air interface transmission delay is high, and an existing solution cannot meet a requirement for a low air interface transmission delay when a plurality of services are concurrent. Therefore, how to reduce the air interface transmission delay becomes an urgent problem to be resolved.

### SUMMARY

Embodiments of this application provide a communication method and apparatus, to reduce an air interface transmission delay.

To achieve the foregoing objective, this application uses the following technical solutions.

According to a first aspect, a communication method is provided. The communication method includes: A communication device determines a time offset value based on scheduling and orchestration information and time of arrival. The communication device sends the time offset value to an application network element. The scheduling and orchestration information indicates a scheduling moment, the time of arrival indicates a moment at which a first data packet in a service flow arrives at the communication device, and the time offset value is a difference between the moment at which the first data packet arrives at the communication device and the scheduling moment.

With reference to the communication methods provided in the first aspect and a third aspect, the communication device determines the time offset value based on the scheduling moment and the time of arrival, and sends the time offset value to the application network element, and the application network element adjusts, based on the time offset value, a data packet sending moment, where the time of arrival indicates the moment at which the first data packet in the service flow arrives at the communication device, and the time offset value is the difference between the moment at which the first data packet arrives at the communication device and the scheduling moment. In this way, the data packet sending moment is obtained through adjustment based on the difference between the time of arrival and the scheduling moment. A moment at which a data packet arrives at an air interface may be adjusted by adjusting the data packet sending moment, so that the data packet is scheduled in short time or immediately after arriving at the communication device, thereby reducing an air interface transmission delay.

In a possible design manner, the time of arrival may be received by the communication device from the application network element. In other words, the time of arrival may be received by a terminal device or an access network device from another network element.

In a possible design manner, the time of arrival may be determined by the communication device based on the moment at which the first data packet arrives at the communication device. For example, the first data packet may be a data packet actually received by the communication device, and the terminal device or the access network device may determine a moment at which the first data packet is actually received as the time of arrival.

In a possible design manner, the communication device is an access network device, the scheduling and orchestration information is determined by the access network device based on parameter information, the parameter information includes a service periodicity and/or service flow time of arrival, and the service flow time of arrival indicates a moment at which a second data packet in the service flow arrives at the communication device. In a downlink transmission scenario, the communication device may be an access network device, the scheduling and orchestration information may indicate one or more scheduling moments, and the scheduling moment determined based on the parameter information can reduce the air interface transmission delay.

In a possible design manner, that the scheduling and orchestration information is determined by the access network device based on parameter information may include: The scheduling and orchestration information is determined by the access network device based on parameter information corresponding to at least two service flows. In this way, the access network device determines scheduling moments for a plurality of terminal devices or a plurality of end devices based on the parameter information corresponding to the at least two service flows, so that the scheduling moments of the plurality of service flows can be adjusted, thereby reducing an air interface scheduling conflict and improving resource utilization.

In a possible design manner, the at least two service flows may include a first service flow and a second service flow, where a difference between service flow time of arrival corresponding to the first service flow and service flow time of arrival corresponding to the second service flow is less than or equal to a first threshold, and a scheduling moment corresponding to the first service flow and a scheduling moment corresponding to the second service flow are greater than or equal to a second threshold. In this way, the scheduling moments of the plurality of service flows can be orchestrated, to reduce the air interface scheduling conflict and maximize radio resource utilization.

In a possible design manner, the parameter information may further include one or more of the following: service flow survival time, a service flow direction, watchdog time, a time domain parameter, a delay from a transmitter terminal device to a user plane network element, uplink and downlink flow forwarding information, a service packet size, a topological relationship, and a communication feature.

In a possible design manner, the communication method provided in the first aspect may further include: The access network device receives the parameter information from the application network element. For example, in an uplink transmission scenario and the downlink transmission scenario, the parameter information may be received by the access network device from the application network element via a network element, for example, a network exposure network element, a delay clock network element, a policy control network element, a user plane network element, a session management network element, and/or a mobility management network element.

In a possible design manner, the communication device is an access network device, and the communication method provided in the first aspect may further include: The access network device allocates a resource based on the scheduling and orchestration information. In other words, the access network device may allocate the resource to the terminal device or the end device based on the scheduling and orchestration information.

In a possible design manner, the communication device is a terminal device, and the communication method provided in the first aspect may further include: The terminal device receives the scheduling and orchestration information from an access network device.

Optionally, the communication device is a terminal device, and that the communication device sends the time offset value to an application network element may include: The terminal device sends the time offset value to the mobility management network element, and then the mobility management network element sends the time offset value to the application network element. Alternatively, the terminal device sends the time offset value to the access network device, and then the access network device sends the time offset value to the application network element.

In a possible design manner, the communication method provided in the first aspect may further include: The communication device receives updated parameter information from the application network element. The updated parameter information may include updated service flow time of arrival and/or effective time of the updated service flow time of arrival. In this way, after receiving the updated service flow time of arrival, the access network device may determine new scheduling and orchestration information based on the updated parameter information, and may perform scheduling and orchestration for a plurality of times, thereby improving a matching degree between the data packet sending moment and the scheduling moment.

In a possible design manner, the updated service flow time of arrival includes updated uplink service flow time of arrival, the communication device is the access network device, and the communication method provided in the first aspect may further include: The access network device determines downlink service flow time of arrival based on the updated uplink service flow time of arrival. In this way, in a scenario in which the transmitter terminal device interacts with a receiver terminal device, the air interface transmission delay in both an uplink transmission process and a downlink transmission process can be reduced.

In a possible design manner, that the communication device sends the time offset value to an application network element may include: When the time offset value is greater than a third threshold, the communication device sends the time offset value to the application network element. In this way, a specific condition may be added when the communication device sends the time offset value, to avoid frequent adjustment of the data packet sending moment.

According to a second aspect, a communication method is provided. The communication method includes: An access network device receives a time offset value from a terminal device. The access network device sends the time offset value to an application network element. The time offset value is a difference between a moment at which a first data packet in a service flow arrives at the terminal device and a scheduling moment.

In a possible design manner, the communication method provided in the second aspect may further include: The access network device determines scheduling and orchestration information based on parameter information. The parameter information may include a service periodicity and/or service flow time of arrival, the service flow time of arrival indicates a moment at which a second data packet in the service flow arrives at the terminal device, and the scheduling and orchestration information indicates the scheduling moment.

In a possible design manner, the parameter information may further include one or more of the following: service flow survival time, a service flow direction, watchdog time, a time domain parameter, a delay from a transmitter terminal device to a user plane network element, uplink and downlink flow forwarding information, a service packet size, a topological relationship, and a communication feature.

In a possible design manner, that the access network device determines scheduling and orchestration information based on parameter information may include: The access network device determines, based on parameter information respectively corresponding to at least two service flows, scheduling and orchestration information respectively corresponding to the at least two service flows.

In a possible design manner, the at least two service flows may include a first service flow and a second service flow, where a difference between service flow time of arrival corresponding to the first service flow and service flow time of arrival corresponding to the second service flow is less than or equal to a first threshold, and a scheduling moment corresponding to the first service flow and a scheduling moment corresponding to the second service flow are greater than or equal to a second threshold.

In a possible design manner, the communication method provided in the second aspect may further include: The access network device receives the parameter information from the application network element.

In a possible design manner, the communication method provided in the second aspect may further include: The access network device sends the scheduling and orchestration information to the terminal device.

In a possible design manner, the communication method provided in the second aspect may further include: The access network device allocates a resource based on the scheduling and orchestration information.

In a possible design manner, the communication method provided in the second aspect may further include: The access network device receives updated parameter information from the application network element. The updated parameter information may include updated service flow time of arrival and/or effective time of the updated service flow time of arrival.

In addition, for technical effects of the communication method according to the second aspect, refer to the technical effects of the communication method according to any possible implementation of the first aspect. Details are not described herein again.

According to a third aspect, a communication method is provided. The communication method includes: An application network element receives a time offset value from a communication device; and the application network element determines a packet sending moment based on the time offset value; or the application network element sends the time offset value. The time offset value is a difference between a moment at which a first data packet in a service flow arrives at the communication device and a scheduling moment. The packet sending moment indicates a sending moment of a third data packet in the service flow.

In a possible design, the communication method provided in the third aspect may further include: The application network element sends updated parameter information to the communication device. The updated parameter information may include updated service flow time of arrival and/or effective time of the updated service flow time of arrival, and the updated service flow time of arrival indicates an updated moment at which a second data packet in the service flow arrives at the communication device.

In a possible design manner, the communication method provided in the third aspect may further include: The application network element sends parameter information to the communication device. The parameter information includes a service periodicity and/or service flow time of arrival, and the service flow time of arrival indicates a moment at which the second data packet in the service flow arrives at the communication device.

In a possible design manner, the parameter information may further include one or more of the following: service flow survival time, a service flow direction, watchdog time, a time domain parameter, a delay from a transmitter terminal device to a user plane network element, uplink and downlink flow forwarding information, a service packet size, a topological relationship, and a communication feature.

In a possible design manner, the communication method provided in the third aspect may further include: The application network element receives the parameter information from an end device.

In a possible design manner, the communication method provided in the third aspect may further include: The application network element receives a notification message from the end device. The notification message indicates whether the packet sending moment is successfully determined.

In a possible design manner, the notification message may include packet sending effective time, and the packet sending effective time may indicate effective time of the packet sending moment.

In addition, for technical effects of the communication method according to the third aspect, refer to the technical effects of the communication method according to any possible implementation of the first aspect. Details are not described herein again.

According to a fourth aspect, a communication method is provided. The communication method includes: An end device receives a time offset value from an application network element. The end device determines a packet sending moment based on the time offset value. The time offset value is a difference between a moment at which a first data packet in a service flow arrives at a communication device and a scheduling moment. The packet sending moment indicates a sending moment of a third data packet in the service flow.

In a possible design manner, the communication method provided in the fourth aspect may further include: The end device sends a notification message to the application network element. The notification message may indicate whether the packet sending moment is successfully determined.

In a possible design manner, the notification message includes packet sending effective time, and the packet sending effective time indicates effective time of the packet sending moment.

In a possible design manner, the communication method provided in the fourth aspect may further include: The end device sends the third data packet based on the packet sending moment.

In a possible design manner, the communication method provided in the fourth aspect may further include: The end device sends parameter information to the application network element. The parameter information may include a service periodicity and/or service flow time of arrival, and the service flow time of arrival indicates a moment at which a second data packet in the service flow arrives at the communication device.

In a possible design manner, the parameter information may further include one or more of the following: service flow survival time, a service flow direction, watchdog time, a time domain parameter, a delay from a transmitter terminal device to a user plane network element, uplink and downlink flow forwarding information, a service packet size, a topological relationship, and a communication feature.

In addition, for technical effects of the communication method according to the fourth aspect, refer to the technical effects of the communication method according to any possible implementation of the first aspect. Details are not described herein again.

According to a fifth aspect, a communication apparatus is provided. The communication apparatus includes a processing module and a sending module.

The processing module is configured to determine a time offset value based on scheduling and orchestration information and time of arrival. The sending module is configured to send the time offset value to an application network element. The scheduling and orchestration information indicates a scheduling moment, the time of arrival indicates a moment at which a first data packet in a service flow arrives at the communication apparatus, and the time offset value is a difference between the moment at which the first data packet arrives at the communication apparatus and the scheduling moment.

In a possible design manner, the time of arrival may be received by the communication apparatus from the application network element.

In a possible design manner, the time of arrival may be determined by the communication apparatus based on the moment at which the first data packet arrives at the communication apparatus.

In a possible design manner, the communication apparatus is an access network device, the scheduling and orchestration information is determined by the access network device based on parameter information, the parameter information includes a service periodicity and/or service flow time of arrival, and the service flow time of arrival indicates a moment at which a second data packet in the service flow arrives at the communication apparatus.

In a possible design manner, that the scheduling and orchestration information is determined by the access network device based on parameter information may include: The scheduling and orchestration information is determined by the access network device based on parameter information corresponding to at least two service flows.

In a possible design manner, the at least two service flows may include a first service flow and a second service flow, where a difference between service flow time of arrival corresponding to the first service flow and service flow time of arrival corresponding to the second service flow is less than or equal to a first threshold, and a scheduling moment corresponding to the first service flow and a scheduling moment corresponding to the second service flow are greater than or equal to a second threshold.

In a possible design manner, the parameter information may further include one or more of the following: service flow survival time, a service flow direction, watchdog time, a time domain parameter, a delay from a transmitter terminal device to a user plane network element, uplink and downlink flow forwarding information, a service packet size, a topological relationship, and a communication feature.

In a possible design manner, the communication apparatus provided in the fifth aspect may further include a receiving module. The receiving module is configured to receive the parameter information from the application network element.

In a possible design manner, the communication apparatus is an access network device, and the processing module is further configured to allocate a resource based on the scheduling and orchestration information.

In a possible design manner, the communication apparatus is a terminal device, and the receiving module is further configured to receive the scheduling and orchestration information from an access network device.

In a possible design manner, the receiving module is further configured to receive updated parameter information from the application network element. The updated parameter information may include updated service flow time of arrival and/or effective time of the updated service flow time of arrival.

In a possible design manner, the updated service flow time of arrival includes updated uplink service flow time of arrival, the communication apparatus is an access network device, and the processing module is further configured to determine downlink service flow time of arrival based on the updated uplink service flow time of arrival.

In a possible design manner, the sending module is further configured to: when the time offset value is greater than a third threshold, send the time offset value to the application network element.

It should be noted that the receiving module and the sending module may be separately disposed, or may be integrated into one module, namely, a transceiver module. Specific implementations of the receiving module and the sending module are not specifically limited in this application.

Optionally, the communication apparatus according to the fifth aspect may further include a storage module, and the storage module stores a program or instructions. When the processing module executes the program or the instructions, the communication apparatus according to the fifth aspect is enabled to perform the method according to the first aspect.

It should be noted that, the communication apparatus according to the fifth aspect may be an access network device or a terminal device, or may be a chip (system) or another part or component that may be disposed in the access network device or the terminal device. This is not limited in this application.

In addition, for technical effects of the communication apparatus according to the fifth aspect, refer to the technical effects of the communication method according to any possible implementation of the first aspect. Details are not described herein again.

According to a sixth aspect, a communication apparatus is provided. The communication apparatus includes a receiving module and a sending module.

The receiving module is configured to receive a time offset value from a terminal device. The time offset value is a difference between a moment at which a first data packet in a service flow arrives at the terminal device and a scheduling moment.

The sending module is configured to send the time offset value to an application network element.

In a possible design manner, the communication apparatus provided in the sixth aspect may further include a processing module. The processing module is configured to determine scheduling and orchestration information based on parameter information. The parameter information may include a service periodicity and/or service flow time of arrival, the service flow time of arrival indicates a moment at which a second data packet in the service flow arrives at the terminal device, and the scheduling and orchestration information indicates the scheduling moment.

In a possible design manner, the parameter information may further include one or more of the following: service flow survival time, a service flow direction, watchdog time, a time domain parameter, a delay from a transmitter terminal device to a user plane network element, uplink and downlink flow forwarding information, a service packet size, a topological relationship, and a communication feature.

In a possible design manner, the processing module is further configured to determine, based on parameter information respectively corresponding to at least two service flows, scheduling and orchestration information respectively corresponding to the at least two service flows.

In a possible design manner, the at least two service flows may include a first service flow and a second service flow, where a difference between service flow time of arrival corresponding to the first service flow and service flow time of arrival corresponding to the second service flow is less than or equal to a first threshold, and a scheduling moment corresponding to the first service flow and a scheduling moment corresponding to the second service flow are greater than or equal to a second threshold.

In a possible design manner, the receiving module is further configured to receive the parameter information from the application network element.

In a possible design manner, the sending module is further configured to send the scheduling and orchestration information to the terminal device.

In a possible design manner, the processing module is further configured to allocate a resource based on the scheduling and orchestration information.

In a possible design manner, the receiving module is further configured to receive updated parameter information from the application network element. The updated parameter information may include updated service flow time of arrival and/or effective time of the updated service flow time of arrival.

It should be noted that the receiving module and the sending module may be separately disposed, or may be integrated into one module, namely, a transceiver module. Specific implementations of the receiving module and the sending module are not specifically limited in this application.

Optionally, the communication apparatus according to the sixth aspect may further include a storage module, and the storage module stores a program or instructions. When the processing module executes the program or the instructions, the communication apparatus according to the sixth aspect is enabled to perform the method according to the second aspect.

It should be noted that, the communication apparatus according to the sixth aspect may be an access network device, or may be a chip (system) or another part or component that may be disposed in the access network device. This is not limited in this application.

In addition, for technical effects of the communication apparatus according to the sixth aspect, refer to the technical effects of the communication method according to any possible implementation of the second aspect. Details are not described herein again.

According to a seventh aspect, a communication apparatus is provided. The communication apparatus includes a receiving module and a processing module, or includes a receiving module and a sending module.

The receiving module is configured to receive a time offset value from a communication device. The processing module is configured to determine a packet sending moment based on the time offset value, or the sending module is configured to send the time offset value. The time offset value is a difference between a moment at which a first data packet in a service flow arrives at the communication device and a scheduling moment. The packet sending moment indicates a sending moment of a third data packet in the service flow.

In a possible design manner, the sending module is further configured to send updated parameter information to the communication device. The updated parameter information may include updated service flow time of arrival and/or effective time of the updated service flow time of arrival, and the updated service flow time of arrival indicates an updated moment at which a second data packet in the service flow arrives at the communication device.

In a possible design manner, the sending module is further configured to send parameter information to the communication device. The parameter information includes a service periodicity and/or service flow time of arrival, and the service flow time of arrival indicates a moment at which the second data packet in the service flow arrives at the communication device.

In a possible design manner, the parameter information may further include one or more of the following: service flow survival time, a service flow direction, watchdog time, a time domain parameter, a delay from a transmitter terminal device to a user plane network element, uplink and downlink flow forwarding information, a service packet size, a topological relationship, and a communication feature.

In a possible design manner, the receiving module is further configured to receive the parameter information from an end device.

In a possible design manner, the receiving module is further configured to receive a notification message from the end device. The notification message indicates whether the packet sending moment is successfully determined.

In a possible design manner, the notification message may include packet sending effective time, and the packet sending effective time may indicate effective time of the packet sending moment.

It should be noted that the receiving module and the sending module may be separately disposed, or may be integrated into one module, namely, a transceiver module. Specific implementations of the receiving module and the sending module are not specifically limited in this application.

Optionally, the communication apparatus according to the seventh aspect may further include a storage module, and the storage module stores a program or instructions. When the processing module executes the program or the instructions, the communication apparatus according to the seventh aspect is enabled to perform the method according to the third aspect.

It should be noted that, the communication apparatus according to the seventh aspect may be an application network element, or may be a chip (system) or another part or component that may be disposed in the application network element. This is not limited in this application.

In addition, for technical effects of the communication apparatus according to the seventh aspect, refer to the technical effects of the communication method according to any possible implementation of the third aspect. Details are not described herein again.

According to an eighth aspect, a communication apparatus is provided. The communication apparatus includes a receiving module and a processing module. The receiving module is configured to receive a time offset value from an application network element. The processing module is configured to determine a packet sending moment based on the time offset value. The time offset value is a difference between a moment at which a first data packet in a service flow arrives at a communication device and a scheduling moment. The packet sending moment indicates a sending moment of a third data packet in the service flow.

In a possible design manner, the communication apparatus provided in the eighth aspect may further include a sending module. The sending module is configured to send a notification message to the application network element. The notification message may indicate whether the packet sending moment is successfully determined.

In a possible design manner, the notification message includes packet sending effective time, and the packet sending effective time indicates effective time of the packet sending moment.

In a possible design manner, the sending module is further configured to send the third data packet based on the packet sending moment.

In a possible design manner, the sending module is further configured to send parameter information to the application network element. The parameter information may include a service periodicity and/or service flow time of arrival, and the service flow time of arrival indicates a moment at which a second data packet in the service flow arrives at the communication device.

In a possible design manner, the parameter information may further include one or more of the following: service flow survival time, a service flow direction, watchdog time, a time domain parameter, a delay from a transmitter terminal device to a user plane network element, uplink and downlink flow forwarding information, a service packet size, a topological relationship, and a communication feature.

It should be noted that the receiving module and the sending module may be separately disposed, or may be integrated into one module, namely, a transceiver module. Specific implementations of the receiving module and the sending module are not specifically limited in this application.

Optionally, the communication apparatus according to the eighth aspect may further include a storage module, and the storage module stores a program or instructions. When the processing module executes the program or the instructions, the communication apparatus according to the eighth aspect is enabled to perform the method according to the fourth aspect.

It should be noted that the communication apparatus according to the eighth aspect may be an end device, or may be a chip (system) or another part or component that may be disposed in the end device. This is not limited in this application.

In addition, for technical effects of the communication apparatus according to the eighth aspect, refer to the technical effects of the communication method according to any possible implementation of the fourth aspect. Details are not described herein again.

According to a ninth aspect, a communication apparatus is provided. The communication apparatus includes a processor. The processor is coupled to a memory, and the memory is configured to store a computer program.

The processor is configured to execute the computer program stored in the memory, so that the communication method according to any possible implementation of the first aspect to the fourth aspect is performed.

In a possible design, the communication apparatus according to the ninth aspect may further include a transceiver. The transceiver may be a transceiver circuit or an input/output port. The transceiver may be used by the communication apparatus to communicate with another device.

It should be noted that, the input port may be configured to implement a receiving function in the first aspect to the fourth aspect, and the output port may be configured to implement a sending function in the first aspect to the fourth aspect.

In this application, the communication apparatus according to the ninth aspect may be an access network device, a terminal device, an application network element, or an end device, or a chip or a chip system disposed inside the access network device, the terminal device, the application network element, or the end device.

In addition, for technical effects of the communication apparatus according to the ninth aspect, refer to the technical effects of the communication method according to any possible implementation of the first aspect to the fourth aspect. Details are not described herein again.

According to a tenth aspect, a communication system is provided. The communication system includes the communication apparatus according to the fifth aspect (the communication apparatus is an access network device) and the communication apparatus according to the seventh aspect. Alternatively, the communication system includes the communication apparatus according to the fifth aspect (the communication apparatus is a terminal device), the communication apparatus according to the sixth aspect, and the communication apparatus according to the seventh aspect. The communication system may further include the communication apparatus according to the eighth aspect.

Alternatively, the communication system includes the communication apparatus (the communication apparatus is an access network device) according to the fifth aspect that is configured to implement the method according to the first aspect, and the communication apparatus according to the seventh aspect that is configured to implement the method according to the third aspect. Alternatively, the communication system includes the communication apparatus (the communication apparatus is a terminal device) according to the fifth aspect that is configured to implement the method according to the first aspect, the communication apparatus according to the sixth aspect that is configured to implement the method according to the first aspect, and the communication apparatus according to the seventh aspect that is configured to implement the method according to the third aspect. The communication system may further include the communication apparatus according to the eighth aspect that is configured to implement the method according to the fourth aspect.

According to an eleventh aspect, a chip system is provided. The chip system includes a logic circuit and an input/output port. The logic circuit is configured to implement the processing function in the first aspect to the fourth aspect, and the input/output port is configured to implement the receiving and sending functions in the first aspect to the fourth aspect. Specifically, the input port may be configured to implement the receiving function in the first aspect to the fourth aspect, and the output port may be configured to implement the sending function in the first aspect to the fourth aspect.

In a possible design, the chip system further includes a memory, and the memory is configured to store program instructions and data for implementing the functions in the first aspect to the fourth aspect.

The chip system may include a chip, or may include a chip and another discrete component.

According to a twelfth aspect, a computer-readable storage medium is provided. The computer-readable storage medium stores a computer program or instructions. When the computer program or the instructions are run on a computer, the communication method according to any possible implementation of the first aspect to the fourth aspect is performed.

According to a thirteenth aspect, a computer program product is provided, including a computer program or instructions. When the computer program or the instructions are run on a computer, the communication method according to any possible implementation of the first aspect to the fourth aspect is performed.

### BRIEF DESCRIPTION OF DRAWINGS

FIG. 1 is a diagram an architecture of a communication system according to an embodiment of this application;
FIG. 2 is a diagram of a network architecture according to an embodiment of this application;
FIG. 3 is a diagram of a scenario in which a terminal device interacts with a network according to an embodiment of this application;
FIG. 4 is a diagram of a scenario in which a transmitter terminal device interacts with a receiver terminal device according to an embodiment of this application;
FIG. 5a is a schematic flowchart of a communication method according to an embodiment of this application;
FIG. 5b is a schematic flowchart of another communication method according to an embodiment of this application;
FIG. 6 is a diagram of a time offset value according to an embodiment of this application;
FIG. 7 is a diagram of a type of scheduling and orchestration information according to an embodiment of this application;
FIG. 8 is a diagram of another type of scheduling and orchestration information according to an embodiment of this application;
FIG. 9 is a diagram of still another type of scheduling and orchestration information according to an embodiment of this application;
FIG. 10A and FIG. 10B are a schematic flowchart of still another communication method according to an embodiment of this application;
FIG. 11 is a schematic flowchart of still another communication method according to an embodiment of this application;
FIG. 12A, FIG. 12B, and FIG. 12C are a schematic flowchart of still another communication method according to an embodiment of this application;
FIG. 13 is a diagram of a structure of a communication apparatus according to an embodiment of this application; and
FIG. 14 is a diagram of a structure of a communication apparatus according to an embodiment of this application.

### DESCRIPTION OF EMBODIMENTS

The following describes technical solutions of this application with reference to the accompanying drawings.

The technical solutions in embodiments of this application may be applied to various communication systems, for example, a universal mobile telecommunications system (universal mobile telecommunications system, UMTS), a wireless local area network (wireless local area network, WLAN), a wireless fidelity (wireless fidelity, Wi-Fi) system, a wired network, a vehicle to everything (vehicle to everything, V2X) communication system, a device-to-device (device-to-device, D2D) communication system, an internet of vehicles communication system, a 4th generation (4th generation, 4G) mobile communication system, for example, a long term evolution (long term evolution, LTE) system or a worldwide interoperability for microwave access (worldwide interoperability for microwave access, WiMAX) communication system, a 5th generation (5th generation, 5G) mobile communication system, for example, a new radio (new radio, NR) system, and a future communication system, for example, a 6th generation (6th generation, 6G) mobile communication system.

All aspects, embodiments, or features are presented in this application by describing a system that may include a plurality of devices, components, modules, and the like. It should be appreciated and understood that, each system may include another device, component, module, and the like, and/or may not include all devices, components, modules, and the like discussed with reference to the accompanying drawings. In addition, a combination of these solutions may be used.

In addition, in embodiments of this application, terms such as "example" and "for example" are used to represent giving an example, an illustration, or a description. Any embodiment or design scheme described as an "example" in this application should not be explained as being more preferred or having more advantages than another embodiment or design scheme. Exactly, the term "example" is used to present a concept in a specific manner.

In embodiments of this application, "of (of)", "corresponding (corresponding, relevant)", and "corresponding (corresponding)" may be interchangeably used sometimes. It should be noted that meanings expressed by the terms are consistent when differences are not emphasized.

The network architecture and the service scenario described in embodiments of this application are intended to describe the technical solutions in embodiments of this application more clearly, and do not constitute a limitation on the technical solutions provided in embodiments of this application. A person of ordinary skill in the art may know that: With the evolution of the network architecture and the emergence of new service scenarios, the technical solutions provided in embodiments of this application are also applicable to similar technical problems.

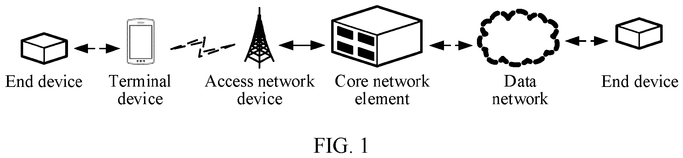

To facilitate understanding of embodiments of this application, a communication system shown in FIG. 1 is first used as an example to describe in detail a communication system applicable to embodiments of this application. For example, FIG. 1 is a diagram of an architecture of a communication system to which a communication method according to an embodiment of this application is applicable.

As shown in FIG. 1, the communication system includes an access network device and a core network element. There may be one or more core network elements. Optionally, the communication system may further include a terminal device, a data network, and/or an end device.

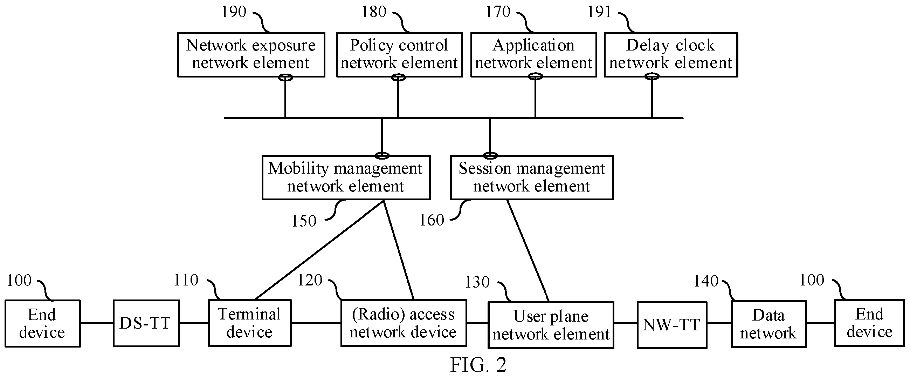

The core network element is a device that is located on a network side of the communication system and that provides a network service for the terminal device, or a chip (system) or another part or component that may be disposed in the device. The core network element may include but is not limited to a mobility management network element, a session management network element, a user plane network element, a policy control network element, a delay clock network element, a network exposure network element, and/or an application network element. For details, refer to corresponding descriptions shown in FIG. 2.

The access network device may also be referred to as an access device. The access network device can manage a radio resource, provide an access service for user equipment, and complete data forwarding between the user equipment and a core network. The access network device may also be understood as a base station in a network.

For example, the access network device in embodiments of this application may be any communication device that has a wireless transceiver function and that is configured to communicate with the terminal device. The access network device includes but is not limited to an evolved NodeB (evolved NodeB, eNB), a radio network controller (radio network controller, RNC), a NodeB (NodeB, NB), a base station controller (base station controller, BSC), a base transceiver station (base transceiver station, BTS), a home base station (a home evolved NodeB, HeNB, or a home NodeB, HNB), a baseband unit (baseBand unit, BBU), an access point (access point, AP) in a wireless fidelity (wireless fidelity, Wi-Fi) system, a wireless relay node, a wireless backhaul node, a transmission point (transmission point, TP), a transmission and reception point (transmission and reception point, TRP), or the like. Alternatively, the access network device may be a gNB or a transmission point (TRP or TP) in a 5G system like an NR system, or one antenna panel or a group of antenna panels (including a plurality of antenna panels) of a base station in the 5G system, or may be a network node, for example, a baseband unit (BBU) or a distributed unit (distributed unit, DU), that constitutes a gNB or a transmission point.

In some deployments, the gNB may include a central unit (central unit, CU) and a DU. The gNB may further include an active antenna unit (active antenna unit, AAU). The CU implements some functions of the gNB, and the DU implements some functions of the gNB. For example, the CU is responsible for processing a non-real-time protocol and service, and implements functions of a radio resource control (radio resource control, RRC) layer and a packet data convergence protocol (packet data convergence protocol, PDCP) layer. The DU is responsible for processing a physical layer protocol and a real-time service, and implements functions of a radio link control (radio link control, RLC) layer, a media access control (media access control, MAC) layer, and a physical (physical, PHY) layer. The AAU implements some physical layer processing functions, radio frequency processing, and a function related to an active antenna. Information at the RRC layer is generated by the CU, and is finally encapsulated at the PHY layer of the DU into information at the PHY layer, or is obtained through conversion from the information at the PHY layer. Therefore, in this architecture, higher layer signaling, for example, RRC layer signaling, may also be considered to be sent by the DU, or sent by the DU and the AAU. It may be understood that the access network device may be a device including one or more of a CU node, a DU node, or an AAU node. In addition, the CU may be classified as an access network device in an access network (radio access network, RAN), or the CU may be classified as an access network device in the core network (core network, CN). This is not limited in this application.

The terminal device is a terminal that accesses the communication system and has a wireless transceiver function, or a chip or a chip system that may be disposed in the terminal. The terminal device may also be referred to as a terminal, user equipment (user equipment, UE), an access terminal, a subscriber unit, a subscriber station, a mobile station, a remote station, a remote terminal, a mobile device, a user terminal, a wireless communication device, a user agent, or a user apparatus. The terminal in embodiments of this application may be a mobile phone (mobile phone), a tablet computer (pad), a computer with a wireless transceiver function, customer premise equipment (customer premise equipment, CPE), a virtual reality (virtual reality, VR) terminal, an augmented reality (augmented reality, AR) terminal, a wireless terminal in industrial control (industrial control), a wireless terminal in self driving (self driving), a wireless terminal in telemedicine (remote medical), a wireless terminal in a smart grid (smart grid), a wireless terminal in transportation safety (transportation safety), a wireless terminal in a smart city (smart city), a wireless terminal in a smart home (smart home), a cellular phone, a cordless phone, a session initiation protocol (session initiation protocol, SIP) phone, a wireless local loop (wireless local loop, WLL) station, a personal digital assistant (personal digital assistant, PDA), a handheld device or a computing device with a wireless communication function, another processing device, vehicle-mounted device, or wearable device connected to a wireless modem, a terminal in a 5G network, a terminal in a future evolved network, or the like.

The wearable device may also be referred to as a wearable intelligent device, and is a general term of wearable devices, such as glasses, gloves, watches, clothes, and shoes, that are developed by applying wearable technologies to intelligent designs of daily wear. The wearable device is a portable device that can be directly worn on the body or integrated into clothes or an accessory of a user. The wearable device is not only a hardware device, but also implements a powerful function through software support, data exchange, and cloud interaction. A wearable intelligent device with a wireless transceiver function includes a full-featured and large-size device that may implement complete or partial functions without depending on a smartphone, for example, a smartwatch or smart glasses.

The end device may be a programmable logic control device, an input/output I/O device, or a terminal or server without a wireless transceiver function, or a chip or a chip system that may be disposed in the programmable logic control device, the input/output device, or the terminal device or server. For example, the programmable logic control device may be a main PLC, a main control robot, or the like, and the input/output device may be any type of I/O module, for example, a digital input/output module, a voltage/current input/output module, or a temperature input/output module. A terminal without a wireless transceiver function may be a device that is dedicated to a specific type of application function and needs to work with a terminal (the terminal device shown in FIG. 1) with a wireless transceiver function, for example, a VR terminal or any type of vital sign monitoring device like a smart band or smart jewelry that needs to work with a smartphone. The terminal without the wireless transceiver function may be a device that is different from the foregoing terminal device, or may be a module in the foregoing terminal device (for example, the end device and the foregoing terminal device may be integrated into one device).

The method provided in this application is applicable to an industrial scenario, a streaming media scenario (for example, a service flow may be an extended reality (extended reality, XR) service), and the like. This is not limited in this application. In the industrial scenario, the end device may be referred to as an industrial device, and the end device may be a programmable logic control device, an input/output device, or the like. In the streaming media scenario, the end device may be a terminal, a server, or the like without a wireless transceiver function.

For example, the end device may be connected to a data network, and the end device may interact with the core network via the application network element. For example, the application network element may obtain parameter information of the end device, and may send a message to the end device. For example, the message may include a time offset value and the like. For another example, the end device may perform data transmission via the terminal device and the access network device. For example, in an uplink scenario, the input/output device may send data to the programmable logic control device via the terminal device and the access network device. In a downlink scenario, the programmable logic control device may send data to the input/output device via the access network device, the terminal device, and the like. Alternatively, the input/output device may be replaced with the terminal without the wireless transceiver function, and the programmable logic control device may be replaced with a server. In the uplink scenario, the end device (bearing an application program corresponding to the server) may send data to the server via the terminal device, the access network device, and the like. In the downlink scenario, the server may send data to the end device via the access network device, the terminal device, and the like.

The foregoing data network may be used to provide, for example, an operator service, an internet access service, or a third-party service, and includes a server, where the server implements video source encoding, rendering, and the like. In the 5G communication system, the data network may be a data network (data network, DN).

Optionally, the communication system shown in FIG. 1 is applicable to the communication network in question, or is applicable to a future network, or the like. This is not specifically limited in this embodiment of this application.

For example, FIG. 2 is a diagram of a network architecture according to an embodiment of this application. The communication system shown in FIG. 1 may be applicable to the network architecture shown in FIG. 2.

As shown in FIG. 2, the network architecture may include but is not limited to one or more of the following: an end device 100, a terminal device 110, a (radio) access network device 120, a user plane network element 130, a data network 140, a mobility management network element 150, a session management network element 160, an application network element 170, a policy control network element 180, a network exposure network element 190, and a delay clock network element 191. The following separately describes the network elements in the network architecture.
1. For an implementation of the end device 100, refer to the descriptions of the end device in FIG. 1. For an implementation of the terminal device 110, refer to the descriptions of the terminal device in FIG. 1. Details are not described herein again.
   Optionally, the architecture shown in FIG. 2 may further include a device side time sensitive network translator (device side time sensitive network translator, DS-TT). The device side time sensitive network translator and the terminal device may be separate devices, or the device side time sensitive network translator and the terminal device may be integrated into one device. This is not limited in this application.
2. For an implementation of the (radio) access network ((radio) access network, (R)AN) device 120, refer to the descriptions of the access network device in FIG. 1. Details are not described herein again.
3. The user plane network element 130 serves as an interface to a data network, and implements functions such as user plane data forwarding, session-level or flow-level charging statistics, and bandwidth throttling, to be specific, packet routing and forwarding, quality of service (quality of service, QoS) handling for user plane data, or the like.

Optionally, the architecture shown in FIG. 2 may further include a network side time sensitive network translator (network side time sensitive network translator, NW-TT). The network side time sensitive network translator and the user plane network element 130 may be separate devices, or the network side time sensitive network translator and the user plane network element 130 may be integrated into one device. This is not limited in this application.

In the 5G communication system, the user plane network element may be a user plane function (user plane function, UPF) network element.

4. For an implementation of the data network 140, refer to the descriptions of the data network in FIG. 1. Details are not described herein again.

5. The mobility management network element 150 is mainly configured to perform mobility management, access management, and the like. In the 5G communication system, the access management network element may be an access and mobility management function (access and mobility management function, AMF) network element, and mainly performs functions such as mobility management and access authentication/authorization. In addition, the mobility management network element may be further responsible for transferring a user policy between a terminal and a policy control function (policy control function, PCF) network element.

6. The session management network element 160 is mainly configured to perform session management (for example, establishment or deletion), maintenance of a session context and user plane forwarding tunnel information, user equipment internet protocol (internet protocol, IP) address allocation and management, selection and control of a user plane function, termination of interfaces toward policy control and charging functions, downlink data notification, and the like.

In the 5G communication system, the session management network element may be a session management function (session management function, SMF) network element, and implements terminal IP address allocation, UPF selection, charging, QoS policy control, and the like.

7. The application network element 170 may be configured to provide various services, can interact with a core network via a network exposure function (network element function, NEF) network element, and can interact with a policy management framework to perform policy management. In the 5G communication system, the application network element may be an application function (application function, AF) network element or a time sensitive network application function (time sensitive network application function, TSNAF) network element, represents an application function of a third party or an operator, is an interface for accessing external application data in a 5G network, and is mainly configured to transfer a requirement of an application side on a network side.

8. The policy control network element 180 includes a user subscription data management function, a policy control function, a charging policy control function, quality of service (quality of service, QoS) control, and the like, is a unified policy framework used to govern network behavior, and provides policy rule information and the like for a control plane function network element (for example, an AMF network element or an SMF network element).

In the 5G communication system, the policy control network element may be a PCF.

9. The network exposure network element 190 may be configured to provide a framework, authentication, and an interface that are related to network capability exposure, and transfers information between a 5G system network function and another network function. In the 5G communication system, the network exposure network element may be a network exposure function (network exposure function, NEF) network element, is mainly configured to expose a service and a capability of a 3GPP network function to an AF, and may further enable the AF to provide information for the 3GPP network function.

10. The delay clock network element 191 may be configured to implement a function related to clock synchronization control. The delay clock network element may be a time sensitive communication and time synchronization function (time sensitive communication and time synchronization function, TSCTSF) network element.

It may be understood that these network elements or functions may be network elements in a hardware device, may be software functions running on dedicated hardware, or may be virtualized functions instantiated on a platform (for example, a cloud platform). One or more services may be obtained through division based on the foregoing function network element. Further, a service independent of a network function may exist. The network elements or the functions may be implemented by one device, or may be jointly implemented by a plurality of devices, or may be one functional module in one device. This is not specifically limited in embodiments of this application.

It should be noted that the communication method provided in embodiments of this application is applicable to the communication system shown in FIG. 1. For specific implementation, refer to the following method embodiments. Details are not described herein.

It should be noted that, the solutions in embodiments of this application may be further applied to another communication system, and a corresponding name may also be replaced with a name of a corresponding function in the another communication system.

It should be understood that FIG. 1 is merely an example of a simplified diagram for ease of understanding. The communication system may further include another network device and/or another terminal device that are/is not shown in FIG. 1.

To make embodiments of this application clearer, the following uniformly describes some content and concepts related to embodiments of this application.

First, uplink grant-free scheduling procedure and downlink semi-persistent scheduling procedure:

Uplink grant-free scheduling procedure: The access network device periodically allocates grant-free uplink resources to the terminal device.

For example, the access network device may configure a physical uplink shared channel (physical uplink share channel, PUSCH) resource by using radio resource control (radio resource control, RRC) signaling, and activate the allocated grant-free uplink resource by using the RRC signaling or downlink control information (downlink control information, DCI). After the resource is activated, the terminal device may directly send PUSCH data on the grant-free uplink resource, and does not need to report a scheduling request.

Basic procedure of downlink scheduling: The access network device allocates a downlink resource to the terminal device based on a channel status, capability information of the terminal device, and the like that are reported by the terminal device, and indicates scheduling information to the terminal device through a physical downlink control channel (physical downlink control channel, PDCCH). The access network device sends data on a PDSCH resource allocated to the terminal device, and the terminal device performs demodulation based on the scheduling information received through the PDCCH channel.

Downlink semi-persistent scheduling procedure: The access network device may configure a periodicity of a downlink resource by using RRC signaling, and activate the downlink resource by using a PDCCH identified by a configured scheduling radio network temporary identifier (configured scheduling radio network temporary identifier, CS-RNTI). The PDCCH identified by the CS-RNTI bears information for scheduling the downlink resource, and indicates that the downlink resource may be multiplexed based on a periodicity defined by the RRC signaling, and the configured downlink resource may alternatively be activated by the PDCCH identified by the CS-RNTI.

Second, scenario in which the terminal device interacts with a network, and scenario in which a transmitter terminal device interacts with a receiver terminal device:

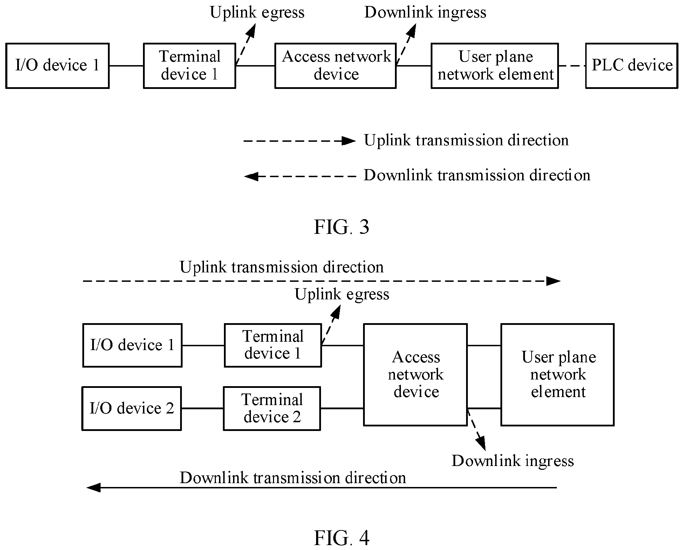

FIG. 3 is a diagram of a scenario in which a terminal device interacts with a network according to an embodiment of this application.

In FIG. 3, an industrial scenario is used as an example. In an uplink transmission scenario, an I/O device 1 sends data to a PLC device via a terminal device 1, an access network device, and a user plane network element. In a downlink transmission scenario, the PLC device sends data to the I/O device 1 via the user plane network element, the access network device, and the terminal device 1.

When used in a streaming media scenario, the I/O device 1 shown in FIG. 3 may be replaced with a terminal without a wireless transceiver function, and the PLC device shown in FIG. 3 may be replaced with a server.

FIG. 4 is a diagram of a scenario in which a transmitter terminal device interacts with a receiver terminal device according to an embodiment of this application.

In FIG. 4, an industrial scenario is used as an example. In a process in which an I/O device 1 sends data to an I/O device 2, after receiving the data from the I/O device 1, a terminal device 1 sends the data to a terminal device 2 via an access network device, a user plane network element, and the access network device in sequence, and the terminal device 2 sends the received data to the I/O device 2. For the terminal device 2, the terminal device 1 is a device that sends the data to the terminal device 2, and the terminal device 1 may be referred to as a transmitter terminal device. For the terminal device 1, the terminal device 2 is a device that receives the data sent by the terminal device 1, and the terminal device 2 may be referred to as a receiver terminal device. The process in which the I/O device 1 transmits the data to the I/O device 2 may include an uplink transmission process and a downlink transmission process. A data transmission direction in the uplink transmission process is: the I/O device 1-the terminal device 1-the access network device-the user plane network element, and a data transmission direction in the downlink transmission process is: the user plane network element-the access network device-the terminal device 2-the I/O device 2.

When used in a streaming media scenario, the I/O device 1 shown in FIG. 4 may be replaced with a terminal 1 without a wireless transceiver function, and the I/O device 2 shown in FIG. 4 may be replaced with a terminal 2 without a wireless transceiver function.

In a process of communication between an industrial device and a network, and in a process of communication between a terminal device and a server, after data arrives at an air interface, the data needs to wait for a period of time before being scheduled for transmission. Consequently, an air interface transmission delay is high, and a requirement for a low air interface transmission delay cannot be met. In addition, a high air interface transmission delay results in a high data transmission delay, and thereby leads to poor user experience. A conventional technology has not provided a specific solution for how to reduce the air interface transmission delay.

In addition, the process of communication between the industrial device and the network is used as an example. A large quantity of industrial devices are connected to the network. Factors such as service concurrency cause an air interface scheduling conflict and low system resource utilization. For example, if a plurality of industrial devices all have a data transmission requirement in a time period 1, and only a few industrial devices or no industrial devices have the data transmission requirement in a time period 2, a large amount of data arrives at an air interface in the time period 1, which causes an air interface scheduling conflict in the time period 1, and no data arrives at the air interface in the time period 2, which causes low system resource utilization. Therefore, how to reduce the air interface scheduling conflict and improve the system resource utilization may be a problem that needs to be further resolved.

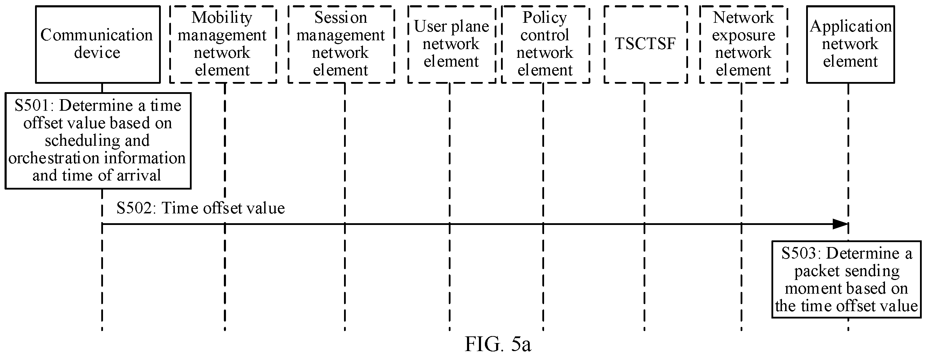

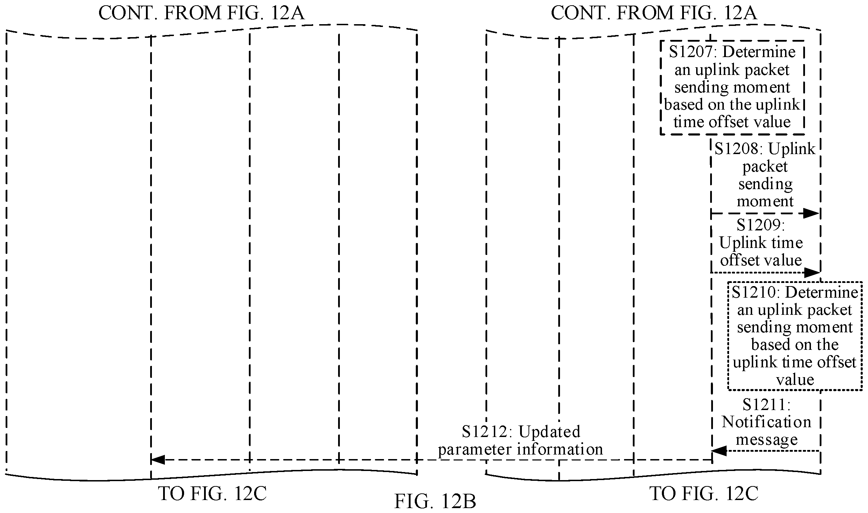

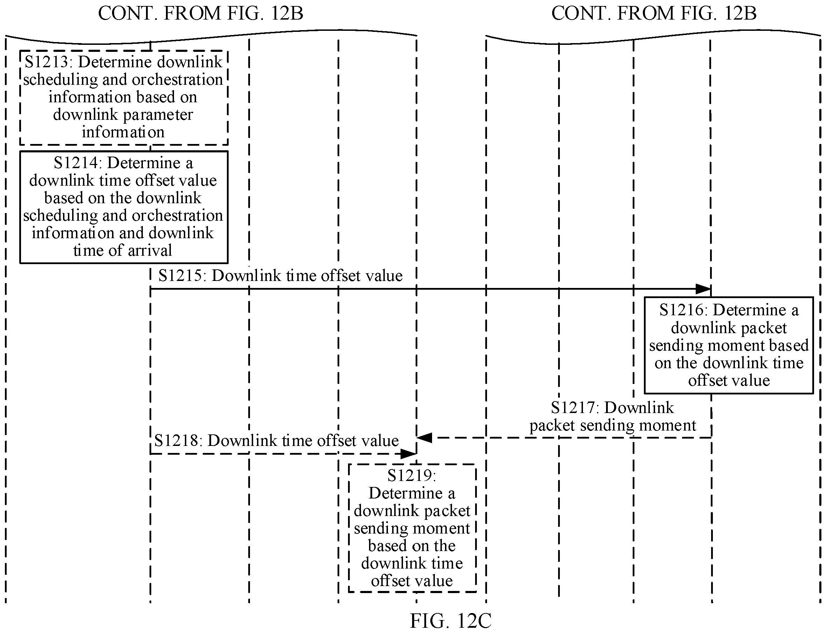

The following specifically describes the communication method provided in embodiments of this application with reference to FIG. 5a to FIG. 12A, FIG. 12B, and FIG. 12C. It should be noted that actions of an application network element in FIG. 5a to FIG. 12A, FIG. 12B, and FIG. 12C may also be replaced with actions performed by a delay clock network element. The communication method provided in embodiments of this application is applicable to an industrial scenario, a streaming media scenario, and the like. This is not limited in this application. FIG. 5a to FIG. 12A, FIG. 12B, and FIG. 12C are described by using an example in which the method provided in embodiments of this application is applied to the industrial scenario (for example, an end device is an industrial device). When used in the streaming media scenario, the industrial device may be replaced with a terminal and a server without a wireless transceiver function. Specifically, an input/output device may be replaced with a terminal without a wireless transceiver function, and a PLC device may be replaced with a server.

For example, FIG. 5a is a schematic flowchart of a communication method according to an embodiment of this application. It should be noted that the communication method shown in FIG. 5a is applicable to a scenario in which a terminal device interacts with a network and a scenario in which a transmitter terminal device interacts with a receiver terminal device. A scenario to which the communication method shown in FIG. 5a is applicable is not limited in this embodiment of this application. A communication device may be a terminal device or an access network device. For example, in an uplink transmission scenario (a service flow is an uplink service flow), the communication device may be a terminal device, an access network device, or a transmitter terminal device, and the terminal device, the access network device, or the transmitter terminal device may perform a function of the communication device in FIG. 5a. In a downlink transmission scenario (a service flow is a downlink service flow), the communication device may be an access network device, and the access network device may perform a function of the communication device in FIG. 5a.

As shown in FIG. 5a, the communication method includes the following steps.

S501: The communication device determines a time offset value based on scheduling and orchestration information and time of arrival.

For example, the scheduling and orchestration information may indicate a scheduling moment.

Optionally, the scheduling and orchestration information may include a scheduling periodicity, a scheduling slot, and the like.

Optionally, the scheduling and orchestration information may indicate a scheduling moment corresponding to uplink and/or a scheduling moment corresponding to downlink.

For example, the time of arrival may indicate a moment at which a first data packet in the service flow arrives at the communication device.

Optionally, the first data packet may be any data packet in the service flow.

Optionally, in the uplink transmission scenario, the time of arrival may indicate a moment at which the first data packet arrives at the terminal device (for example, an uplink egress of the terminal device). In the downlink transmission scenario, the time of arrival may indicate a moment at which the first data packet arrives at the access network device (for example, a downlink ingress of the access network device). The uplink egress of the terminal device is an egress of the terminal device connected to the access network device in the uplink transmission scenario. The downlink ingress of the access network device is an ingress of the access network device connected to a user plane network element in the downlink transmission scenario.

With reference to FIG. 3, the uplink egress of the terminal device is an egress of the terminal device 1 connected to the access network device in the uplink transmission scenario. The downlink ingress of the access network device is an ingress of the access network device connected to the user plane network element in the downlink transmission scenario.

With reference to FIG. 4, the uplink egress of the terminal device is an egress of the terminal device 1 connected to the access network device in an uplink transmission process, and the downlink ingress of the access network device is an ingress of the access network device connected to the user plane network element in a downlink transmission process.

For example, the time offset value may be a difference between a moment at which the first data packet in the service flow arrives at the communication device and the scheduling moment.

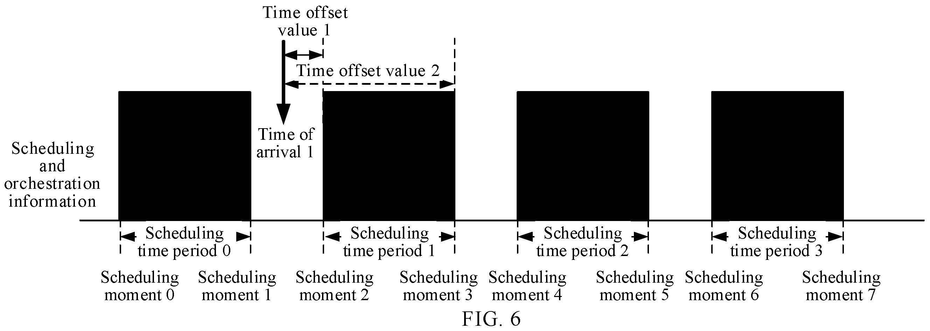

FIG. 6 is a diagram of a time offset value according to an embodiment of this application.

As shown in FIG. 6, scheduling and orchestration information may indicate one or more scheduling moments, and the scheduling and orchestration information indicates to perform scheduling in a scheduling time period 0, a scheduling time period 1, a scheduling time period 2, and a scheduling time period 3. If a moment at which a first data packet arrives at a communication device is time of arrival 1, the time offset value may be a value greater than or equal to a time offset value 1 and less than a time offset value 2, where the time offset value 1 is a difference between a scheduling moment 2 and the time of arrival 1, and the time offset value 2 is a difference between a scheduling moment 3 and the time of arrival 1.

It should be noted that the time offset value may be determined based on time of arrival and a next scheduling time period (for example, the scheduling time period 1 in FIG. 6) after the time of arrival, or the time offset value may be determined based on the time of arrival and any scheduling time period (for example, the scheduling time period 2 in FIG. 6). This is not limited in this application.

For example, in an uplink transmission scenario, the time offset value may be a difference between the time of arrival and an uplink scheduling moment in the scheduling and orchestration information, where the time of arrival may indicate a moment at which the first data packet arrives at an uplink egress of a terminal device.

For another example, in a downlink transmission scenario, the time offset value may be a difference between time of arrival and a downlink scheduling moment in the scheduling and orchestration information, and the time of arrival may indicate a moment at which the first data packet arrives at a downlink ingress of an access network device.

In a possible design method, the time of arrival may be received by the communication device from an application network element.

In other words, the time of arrival may be preset time of arrival received by the terminal device or the access network device from another network element.

For example, the application network element may send the time of arrival to the communication device via a network exposure network element, a delay clock network element, a policy control network element, a session management network element, a mobility management network element, or the like. The communication device may be a terminal device or an access network device.

Optionally, an industrial device may send the preset time of arrival to the application network element. For example, the preset time of arrival may be determined by the industrial device.

For example, the time of arrival may be service flow time of arrival. For a specific implementation of the service flow time of arrival, refer to the following corresponding descriptions. Details are not described herein again.

In another possible design method, the time of arrival may be determined by the communication device based on a moment at which the first data packet arrives at the communication device.

For example, the terminal device or the access network device may determine a moment at which the first data packet is actually received as the time of arrival.

For example, the first data packet may be a data packet actually received by the communication device.

Optionally, in the uplink transmission scenario, the time of arrival may be determined by the terminal device based on the moment at which the first data packet arrives at the communication device.

In some embodiments, the method provided in this embodiment of this application may further include: The terminal device sends the time of arrival to the access network device. Correspondingly, the access network device receives the time of arrival from the terminal device.

For example, in the uplink transmission scenario, if the access network device determines the time offset value based on the scheduling and orchestration information and the moment at which the first data packet is actually received, the moment at which the first data packet is actually received may be received by the access network device from the terminal device.

Optionally, in the downlink transmission scenario, the time of arrival may be determined by the access network device based on the moment at which the first data packet arrives at the communication device.

With reference to FIG. 3, the uplink transmission scenario is used as an example. The I/O device 1 sends a data packet 1 to the terminal device 1, and a moment at which the terminal device 1 receives the data packet 1 is a moment 1. In this case, the terminal device 1 determines that the time of arrival is the moment 1.

With reference to FIG. 3, the downlink transmission scenario is used as an example. The PLC device sends a data packet 2 to the access network device, and a moment at which the access network device receives the data packet 2 is a moment 2. In this case, the access network device determines that the time of arrival is the moment 2.

It should be noted that a manner in which the communication device determines the time of arrival based on the moment at which the first data packet arrives at the communication device is also applicable to a scenario in which a transmitter terminal device interacts with a receiver terminal device (for example, the scenario shown in FIG. 4). Details are not described herein again.

It should be noted that in the uplink transmission scenario, the terminal device, the access network device, or the transmitter terminal device may determine the time offset value based on the scheduling and orchestration information and the time of arrival. In the downlink transmission scenario, the access network device may determine the time offset value based on the scheduling and orchestration information and the time of arrival. This is not limited in this application, provided that the time offset value can be determined.

S502: The communication device sends the time offset value to the application network element. Correspondingly, the application network element receives the time offset value from the communication device.

Optionally, the terminal device or the access network device may send the time offset value to the application network element.

For example, the access network device may send the time offset value to the application network element via a mobility management network element, a session management network element, a policy control network element, a delay clock network element, a network exposure network element, or the like.

In a possible design method, the communication device may be a terminal device, and that the communication device sends the time offset value to the application network element may include: The terminal device sends the time offset value to the access network device, and then the access network device sends the time offset value to the application network element.

For example, in the uplink transmission scenario, the terminal device may send the time offset value to the application network element via the access network device, the mobility management network element, the session management network element, the policy control network element, the delay clock network element, the network exposure network element, or the like.

Alternatively, for example, in the uplink transmission scenario, the terminal device may send the time offset value to the application network element via the mobility management network element, the session management network element, the policy control network element, the delay clock network element, the network exposure network element, or the like. In other words, the terminal device may directly send the time offset value to the mobility management network element.

In some embodiments, the terminal device may send a session modification request message to the access network device, for example, a protocol data unit (protocol data unit, PDU) session modification request message, where the session modification request message may include the time offset value, and may further include a quality of service flow identifier.

In some embodiments, the access network device may send an N2 message, for example, a session resource notification request message, to the mobility management network element. The session resource notification request message may include the time offset value, and may further include the quality of service flow identifier.

In this way, the mobility management network element may determine, based on the quality of service flow identifier, a service flow or a device corresponding to the time offset value.

In a possible design method, that the communication device sends the time offset value to the application network element may include: When the time offset value is greater than a third threshold, the communication device sends the time offset value to the application network element.

Optionally, the third threshold may be preconfigured.

For example, the terminal device or the access network device sends the time offset value only when the time offset value is greater than the third threshold, to request to adjust a data packet sending moment. In this way, a specific condition may be added when the communication device sends the time offset value, to avoid frequent adjustment of the data packet sending moment.

S503: The application network element determines a packet sending moment based on the time offset value.

It should be noted that the application network element and the industrial device may be an entirety, or the application network element and the industrial device are separate devices.

For example, the packet sending moment may indicate a sending moment of a third data packet in the service flow.

For example, the sending moment may indicate a moment at which the industrial device sends the third data packet in the service flow.

Optionally, the third data packet may be any data packet in the service flow, and the third data packet may be the same as or different from a second data packet.

It is assumed that an original sending moment of the third data packet in the service flow is a sending moment 1, and the time offset value is an offset value 1. In this case, a sending moment obtained through adjustment based on the time offset value is equal to the sending moment 1 plus the offset value 1.

In this way, the data packet is sent at an adjusted data packet sending moment (the packet sending moment), so that a moment at which the data packet arrives at the communication device is aligned with a scheduling moment. After arriving at the communication device, the data packet can be scheduled, thereby implementing zero-delay transmission over an air interface.

It should be noted that the access network device may send, to the application network element, a packet sending moment expected by the access network device. For example, the packet sending moment expected by the access network device may be determined by the access network device based on the time offset value. For a specific implementation, refer to an implementation in which the application network element determines the packet sending moment based on the time offset value. Details are not described herein again.

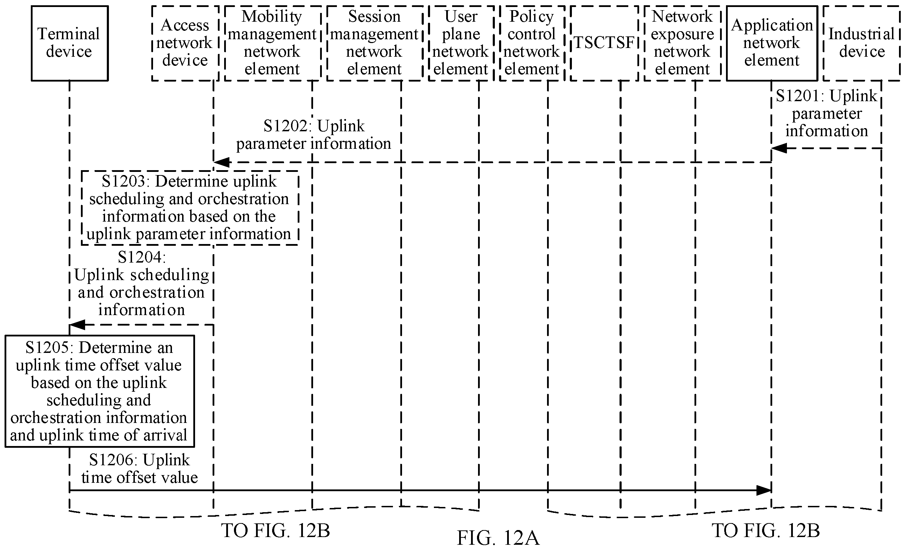

It should be noted that, in the scenario in which the transmitter terminal device interacts with the receiver terminal device, the method shown in FIG. 5a may be performed to reduce an air interface transmission delay in the uplink transmission process (refer to the corresponding descriptions in FIG. 4) and/or an air interface transmission delay in the downlink transmission process (refer to the corresponding descriptions in FIG. 4). For a specific implementation, refer to corresponding descriptions in a method shown in FIG. 12A, FIG. 12B, and FIG. 12C. Details are not described herein again.

According to the communication method shown in FIG. 5a, the time offset value is determined based on the scheduling moment and the time of arrival, and the data packet sending moment is adjusted based on the time offset value. The time of arrival indicates the moment at which the first data packet in the service flow arrives at the communication device, and the time offset value is the difference between the moment at which the first data packet arrives at the communication device and the scheduling moment. In this way, the data packet sending moment is obtained through adjustment based on the difference between the time of arrival and the scheduling moment. A moment at which a data packet arrives at an air interface may be adjusted by adjusting the data packet sending moment, so that the data packet is scheduled in short time or immediately after arriving at the communication device, thereby reducing an air interface transmission delay.

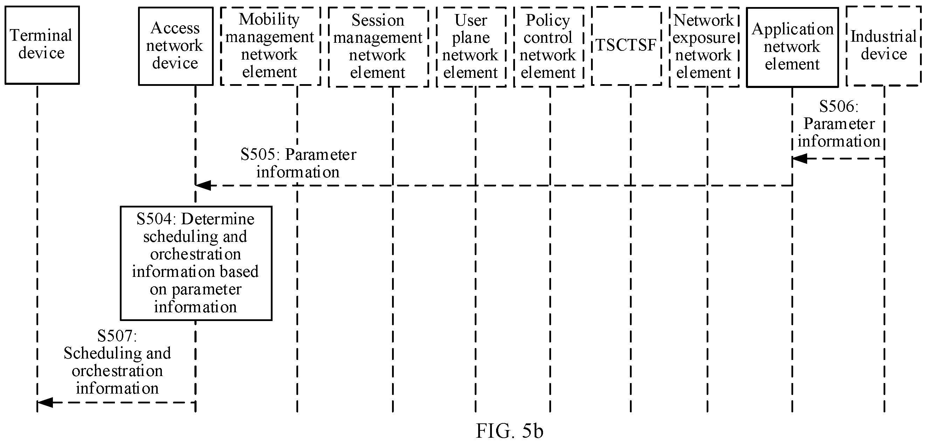

FIG. 5b is a schematic flowchart of another communication method according to an embodiment of this application. The method shown in FIG. 5b may be used in combination with the method shown in FIG. 5a or separately used. For example, the method shown in FIG. 5b may be performed before the method shown in FIG. 5a. It should be noted that when the communication device in the method shown in FIG. 5a is an access network device, the communication device may perform a function of an access network device in the method shown in FIG. 5b. Alternatively, when the communication device in the method shown in FIG. 5a is a terminal device, the communication device may perform a function of a terminal device in the method shown in FIG. 5b.

S504: The access network device determines scheduling and orchestration information based on parameter information.

Optionally, the parameter information may include a service periodicity and/or service flow time of arrival.

Optionally, the service periodicity may be a periodicity of the service flow.

For example, a scheduling periodicity may be determined based on the periodicity of the service flow.

For example, the periodicity of the service flow may be determined as the scheduling periodicity, or a scheduling time period in the scheduling periodicity covers a time period in which there is data for transmission in the periodicity of the service flow.

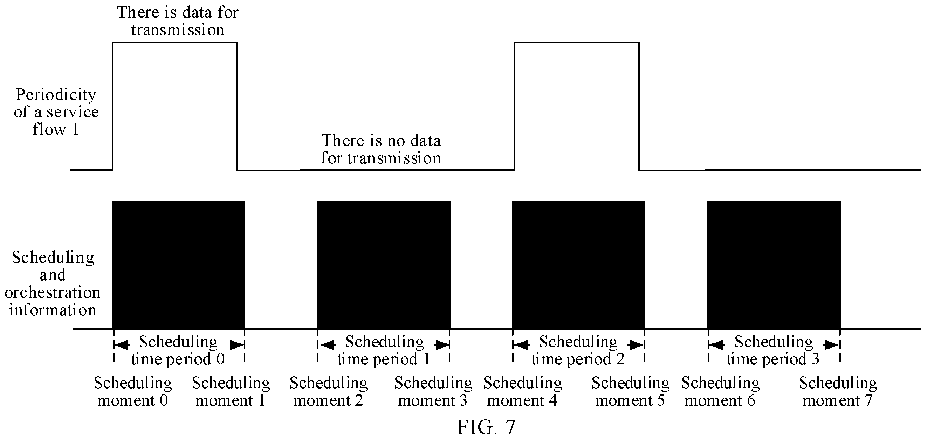

FIG. 7 is a diagram of a type of scheduling and orchestration information according to an embodiment of this application.

As shown in FIG. 7, a periodicity of a service flow 1 is shown in FIG. 7. The scheduling and orchestration information is determined based on the periodicity of the service flow 1, and a scheduling time period of the scheduling and orchestration information covers a time period in which there is data for transmission in the periodicity of the service flow 1.

In this way, when arriving at a communication device, a service flow can be scheduled, thereby implementing zero-delay transmission over an air interface.

Optionally, service flow time of arrival may indicate a moment at which a second data packet in the service flow arrives at the communication device. The communication device may be an access network device or a terminal device.

For example, when parameter information is parameter information corresponding to an uplink service flow, the communication device may be a terminal device. When parameter information is parameter information corresponding to a downlink service flow, the communication device may be an access network device.

Optionally, the second data packet may be any data packet in the service flow. For example, the second data packet may be the same as or different from a first data packet.

For example, the second data packet may be a 1^{st} data packet in the service flow, a 1^{st} data packet in a service flow periodicity of the service flow, a last data packet in the service flow, a last data packet in a service flow periodicity of the service flow, or the like.

In some embodiments, the moment at which the second data packet arrives at the communication device may include a latest allowable moment at which the second data packet arrives at the communication device.

Optionally, the latest allowable moment may include a last scheduling moment in a scheduling periodicity (for example, a scheduling periodicity corresponding to the moment at which the second data packet arrives at the communication device, or a corresponding next scheduling periodicity).

With reference to FIG. 6, it is assumed that the moment at which the second data packet arrives at the communication device is estimated to be a scheduling moment 6. In this case, the latest allowable moment at which the second data packet arrives at the communication device may be a scheduling moment 7 shown in FIG. 6, in other words, the service flow time of arrival may be set to indicate the scheduling moment 7.

Optionally, in the uplink transmission scenario, the service flow time of arrival may indicate a moment at which the second data packet arrives at the terminal device (for example, an uplink egress of the terminal device). In the downlink transmission scenario, the service flow time of arrival may indicate a moment at which the second data packet arrives at the access network device (for example, a downlink ingress of the access network device).

For specific implementations of the uplink egress of the terminal device and the downlink ingress of the access network device, refer to the corresponding descriptions in S501. Details are not described herein again.

It should be noted that a name of the service flow time of arrival is not limited in this embodiment of this application. For example, the service flow time of arrival may be referred to as burst arrival time (burst arrival time).

For example, the one or more scheduling moments indicated by the scheduling and orchestration information may include the service flow time of arrival.

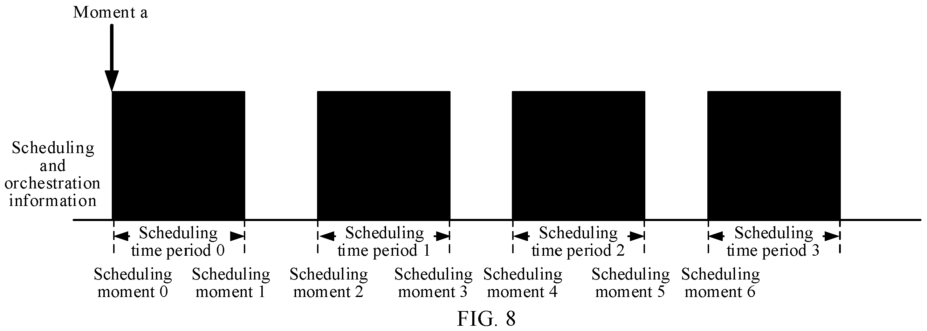

FIG. 8 is a diagram of another type of scheduling and orchestration information according to an embodiment of this application.

For example, service flow time of arrival indicates a moment at which a 1^{st} data packet in the service flow arrives at a communication device. As shown in FIG. 8, it is assumed that the moment at which the 1^{st} data packet (for example, a 1^{st} data packet in a service flow periodicity) in the service flow arrives at the communication device is a moment a. In this case, it may be determined that a start scheduling moment (for example, a scheduling moment 0) of a scheduling time period is equal to the moment a. In this way, when arriving at the communication device at the moment a, the service flow can be scheduled, thereby implementing zero-delay transmission over an air interface. For a corresponding implementation of determining the scheduling and orchestration information when the second data packet is another data packet (a data packet other than the 1^{st} data packet in the service flow), refer to this example. Details are not described in this application again.

In some embodiments, the parameter information may further include one or more of the following: service flow survival time, a service flow direction, watchdog time (watchdog time, WDT), a time domain parameter, a delay from a transmitter terminal device to a user plane network element, uplink and downlink flow forwarding information, a service packet size, a topological relationship, and a communication feature.

Optionally, the service flow survival time may be time spent waiting for the service flow.

For example, if the communication device does not receive the service flow within the service flow survival time, it is considered that the service flow is invalid or a peer end does not send the service flow.

Optionally, the service flow direction may indicate that the service flow is an uplink service flow or a downlink service flow, or indicate that a direction of the service flow is terminal device to network, network to terminal device, I/O device to PLC device, PLC device to I/O device, terminal device to server, server to terminal device, terminal device 1 to terminal device 2, terminal device 2 to terminal device 1, or the like.

Optionally, the watchdog time may be used to perform timing since a moment at which the service flow is received. For example, the watchdog time may be one or more service periodicities.

Optionally, the time domain parameter may be used to identify a clock domain in a clock system to which an industrial device is connected.

For example, the service flow time of arrival may be adjusted by using a correction value indicated by the time domain parameter.

Optionally, the delay from the transmitter terminal device to the user plane network element may be a user plane delay from the transmitter terminal device to the user plane network element.

For example, the delay from the transmitter terminal device to the user plane network element may be a 5G system bridge delay. A 5G system bridge may include a DS-TT port of the terminal device, a user plane tunnel between the terminal device and the user plane network element, and an NW-TT port of the user plane network element.

With reference to FIG. 4, an example in which the terminal device 1 sends data to the terminal device 2 is used. The delay from the transmitter terminal device to the user plane network element may be a delay from the terminal device 1 to the user plane network element.

Optionally, the uplink and downlink flow forwarding information may include a correspondence between a user plane tunnel between the transmitter terminal device and the user plane network element and a user plane tunnel between a receiver terminal device and the user plane network element.

For example, if the service flow is a service flow between terminal devices, the parameter information may include uplink and downlink flow forwarding information.

Optionally, the access network device may determine a size of a resource block (resource block, RB) based on the service packet size.

For example, the resource block is determined based on the service packet size and a modulation and coding scheme (modulation and coding scheme, MCS), and a slot allocation mode may be obtained based on the size of the resource block, a bandwidth, and the like.

Optionally, the topological relationship may include a connection relationship between the industrial device and a communication system.

With reference to FIG. 2, an example in which the end device is an industrial device is used. The connection relationship between the industrial device and the communication system may be that the industrial device (for example, a PLC device) may be connected to the data network, or the industrial device (for example, an I/O device or a PLC device) may be connected to the terminal device.

Optionally, the communication feature may include but is not limited to a protocol type.

Optionally, the communication device may further determine, based on the service flow survival time, the service flow direction, the watchdog time, the time domain parameter (the time of arrival may be adjusted), the delay from the transmitter terminal device to the user plane network element, the uplink and downlink flow forwarding information, the service packet size, the topological relationship, and/or the communication feature, how to schedule the service flow.

In some embodiments, S504 may include: The communication device determines, based on parameter information corresponding to at least two industrial devices, scheduling and orchestration information respectively corresponding to at least two service flows.

Optionally, that the scheduling and orchestration information may be determined by the access network device based on the parameter information may include: The scheduling and orchestration information may be determined by the access network device based on parameter information corresponding to the at least two service flows.

Optionally, the service flow may correspond to the industrial device, and the scheduling and orchestration information may be determined by the access network device based on the parameter information corresponding to the at least two industrial devices.

For example, the access network device may determine the scheduling and orchestration information based on parameter information 1 corresponding to a service flow 1 and parameter information 2 corresponding to a service flow 2. The scheduling and orchestration information may include a scheduling moment corresponding to the service flow 1 and/or a scheduling moment corresponding to the service flow 2.

In this way, the access network device determines scheduling moments for a plurality of terminal devices or a plurality of industrial devices based on parameters such as a service periodicity and/or the service flow time of arrival, so that a plurality of service flows can be evenly scheduled, thereby reducing an air interface scheduling conflict and maximizing radio resource utilization.

In some embodiments, the at least two service flows may include a first service flow and a second service flow.

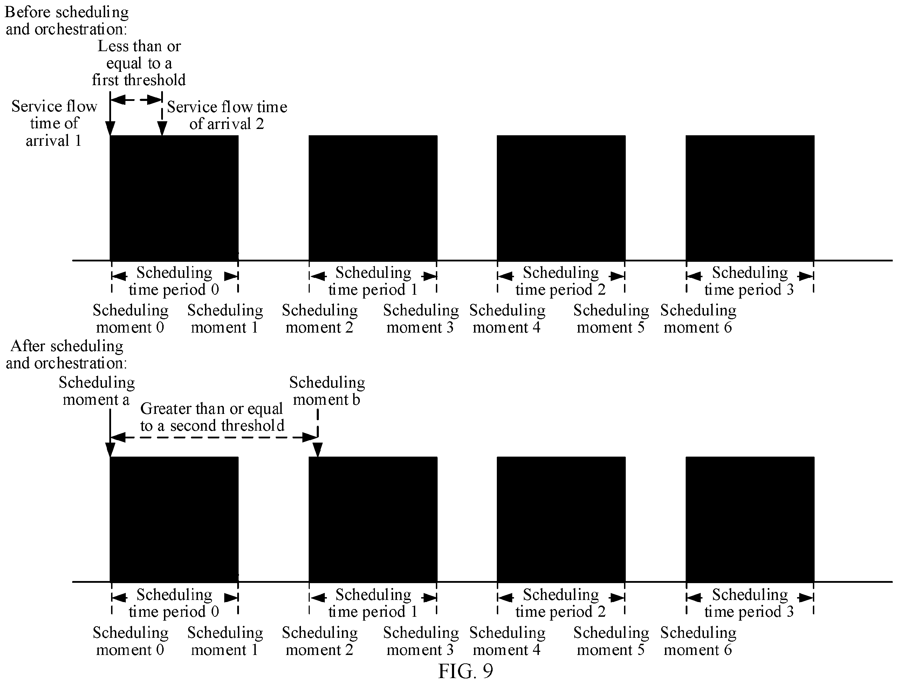

Optionally, a difference between service flow time of arrival corresponding to the first service flow and service flow time of arrival corresponding to the second service flow is less than or equal to a first threshold, and a scheduling moment corresponding to the first service flow and a scheduling moment corresponding to the second service flow are greater than or equal to a second threshold. The following provides detailed descriptions with reference to an example in FIG. 9.

Optionally, the first threshold and the second threshold may be preconfigured, and the second threshold may be greater than the first threshold.

FIG. 9 is a diagram of still another type of scheduling and orchestration information according to an embodiment of this application.

As shown in FIG. 9, before scheduling and orchestration, a service flow 1 corresponds to time of arrival 1 of the service flow, and a service flow 2 corresponds to time of arrival 2 of the service flow. The service flow 1 needs to be scheduled at a moment corresponding to the time of arrival 1 of the service flow in a scheduling time period 0, and the service flow 2 needs to be scheduled at a moment corresponding to the time of arrival 2 of the service flow in the scheduling time period 0. Because the service flow 1 and the service flow 2 arrive at the communication device at moments close to each other, as shown in FIG. 9, a difference between the time of arrival 1 of the service flow and the time of arrival 2 of the service flow is less than or equal to a first threshold, and therefore, an air interface scheduling conflict may exist in the scheduling time period 0. In addition, no service flow needs to be scheduled in another scheduling time period (for example, a scheduling time period 1, a scheduling time period 2, and a scheduling time period 3), resulting in low resource utilization.

As shown in FIG. 9, after scheduling and orchestration, a time interval between a scheduling moment of the service flow 1 and a scheduling moment of the service flow b is increased, where the scheduling moment of the service flow 1 is a scheduling moment a in the scheduling time period 0, the scheduling moment of the service flow 2 is a scheduling moment b in the scheduling time period 1, and a difference between the scheduling moment a and the scheduling moment b is greater than or equal to a second threshold. In this way, an access network device may perform scheduling and orchestration on scheduling moments of a plurality of service flows, to increase a time interval of the scheduling moments of the plurality of service flows, reduce the air interface scheduling conflict in the scheduling time period 0, and improve resource utilization.

In a possible design method, the communication method provided in this embodiment of this application may further include: The access network device allocates a resource based on the scheduling and orchestration information.

For example, the access network device may allocate a scheduling slot to the terminal device based on the scheduling and orchestration information. For example, the access network device may allocate the scheduling slot based on a scheduling moment in the scheduling and orchestration information.

In some embodiments, after allocating the resource based on the scheduling and orchestration information, the access network device may trigger an uplink grant-free scheduling procedure or a downlink semi-persistent scheduling procedure.

In a possible design method, the communication method provided in this embodiment of this application may further include: S505: The application network element sends the parameter information to the access network device. Correspondingly, the access network device receives the parameter information from the application network element.

Optionally, the application network element may send the parameter information to the access network device via a network element, for example, a network exposure network element, a delay clock network element, a policy control network element, a session management network element, and/or a mobility management network element.

It should be noted that an execution occasion of S505 is not limited in this application. For example, S505 may be performed before S504.

In a possible design method, the communication method provided in this embodiment of this application may further include: S506: The industrial device sends the parameter information to the application network element. Correspondingly, the application network element receives the parameter information from the industrial device.

For example, the I/O device, the PLC device, or the like may send parameter information of the I/O device or the PLC device to the application network element.

Optionally, the industrial device and the application network element may interact with each other through a logical interface, for example, an industrial field enabling service (industrial field enabling service, IFES).

It should be noted that an execution occasion of S506 is not limited in this application. For example, S506 may be performed before S505.

In other words, the parameter information in the access network device may be from the industrial device.

In some embodiments, the communication method provided in this embodiment of this application may further include: S507: The access network device sends the scheduling and orchestration information to the terminal device. Correspondingly, the terminal device receives the scheduling and orchestration information from the access network device.

For example, in the uplink transmission scenario, after determining the scheduling and orchestration information, the access network device may send the scheduling and orchestration information to the terminal device. In this way, the terminal device may determine the time offset value based on the scheduling and orchestration information and the time of arrival (corresponding to a case in which the communication device is a terminal device in the method shown in FIG. 5a).

According to the method shown in FIG. 5b, the access network device determines a scheduling moment of the service flow based on the service periodicity and/or the service flow time of arrival, so that the service flow can be scheduled when arriving at the communication device, thereby implementing zero-delay transmission over an air interface. In addition, the access network device may perform the scheduling and orchestration on the scheduling moments of the plurality of service flows, to increase the time interval of the scheduling moments of the plurality of service flows, thereby reducing the air interface scheduling conflict and improving the resource utilization.

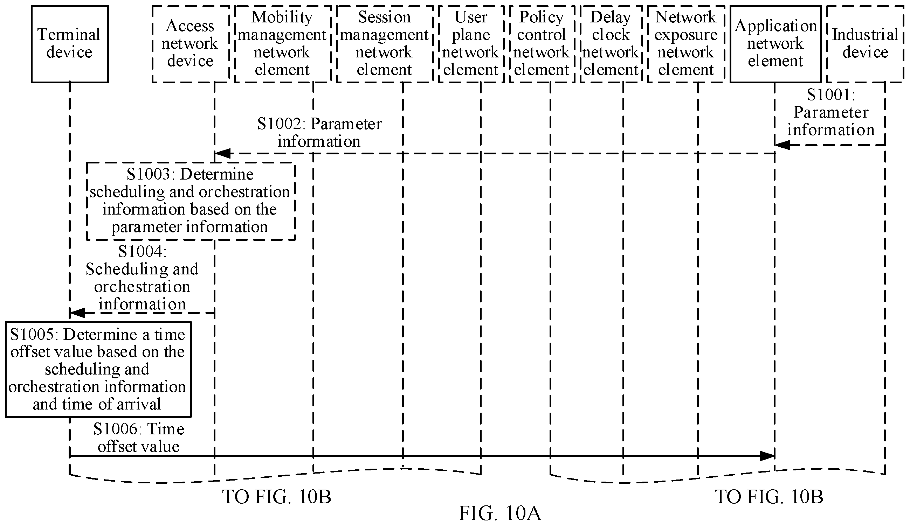

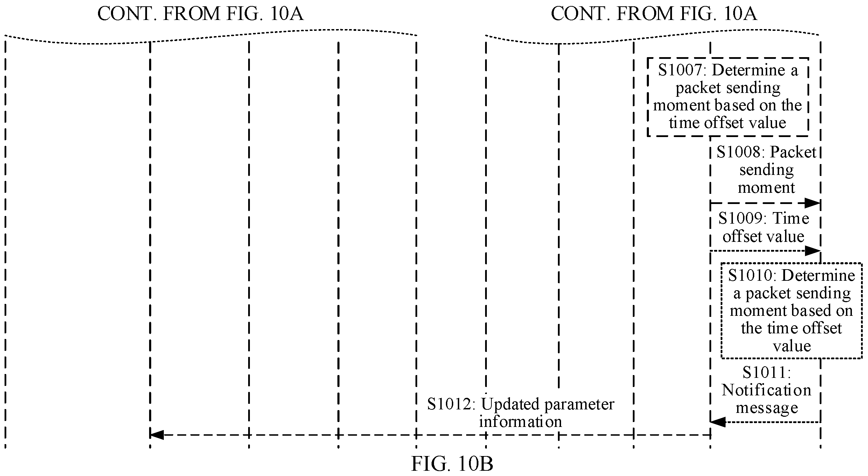

FIG. 10A and FIG. 10B are a schematic flowchart of still another communication method according to an embodiment of this application. In FIG. 10A and FIG. 10B, an uplink transmission scenario in which a terminal device interacts with a network is used as an example to specifically describe the communication methods shown in FIG. 5a and FIG. 5b.

As shown in FIG. 10A and FIG. 10B, the communication method includes the following steps.

S1001: An industrial device sends parameter information to an application network element. Correspondingly, the application network element receives the parameter information from the industrial device.

For example, the industrial device may include an I/O device, a PLC device, or the like.

Optionally, the parameter information may include a service periodicity and/or service flow time of arrival.

In some embodiments, the parameter information may further include one or more of the following: service flow survival time, a service flow direction, watchdog time, a time domain parameter, a service packet size, a topological relationship, and a communication feature.

Optionally, the parameter information may be encapsulated in a time sensitive communication assistance container (time sensitive communication assistance container, TSCAC).

It should be noted that, for a specific implementation of the parameter information, reference may be made to the corresponding descriptions in S504. Details are not described herein again.

S 1002: The application network element sends the parameter information to an access network device. Correspondingly, the access network device receives the parameter information from the application network element.

In some embodiments, S1002 may include: The application network element sends the parameter information to a policy control network element. Correspondingly, the policy control network element receives the parameter information from the application network element.

For example, the application network element may send a QoS parameter to a network exposure network element through a procedure for establishing or modifying an application function session with required QoS (AF session with required QoS). The QoS parameter may correspond to the parameter information, and the parameter information may be obtained by using the QoS parameter. The network exposure network element may send the QoS parameter to the policy control network element through a policy authorization establishment (Npcf_policy authorization_create) procedure.

For example, the network exposure network element may directly send the QoS parameter to the policy control network element, or send the QoS parameter to the policy control network element via a delay clock network element.

Optionally, the QoS parameter may include one or more of the following: a 5G QoS identifier (5G QoS identifier, 5QI), an allocation and retention priority (allocation and retention priority, ARP), a guaranteed bit rate (guaranteed bit rate, GBR), a maximum bit rate (max bit rate, MBR), and the time sensitive communication assistance container.

In some embodiments, different parameter values of the QoS parameter may correspond to different parameter information.

For example, the QoS parameter may be used to establish a PDU session. One PDU session may include a plurality of QoS flows, each QoS flow has a different QoS flow identifier (QoS flow identifier, QFI), and QoS flows included in different PDU sessions may correspond to a same QFI.

In some embodiments, S1002 may further include: The policy control network element determines a policy control and charging (policy control and charging, PCC) rule.

For example, the policy control network element may determine the PCC rule based on the QoS parameter. Alternatively, the policy control network element may authorize a dynamic PCC rule.

Optionally, the PCC rule may be used to provide a parameter for policy control and/or charging control.

In some embodiments, S1002 may further include: A session management network element interacts with the policy control network element, to bind the PCC rule to a quality of service flow.

For example, the session management network element may associate, by using a policy control update notification (Npcf_SM Policy Control Update Notify) procedure, a PCC rule service data flow (service data flow, SDF) (defined in the PCC rule by using an SDF template) with a QoS flow for transmission of the service data flow.

Optionally, PCC rules with a same 5QI value or GBR value may be bound to different QoS flows, to ensure that a guaranteed flow bit rate (guaranteed flow bit rate, GFBR) of the QoS flow reaches a maximum data burst amount of the QoS flow.

In some embodiments, S1002 may include: The session management network element converts the parameter information.

For example, the parameter information is from the industrial device and is a parameter of a 5GS external device. The session management network element may convert the parameter information into a 5GS internal parameter for use by the access network device or the terminal device.

For example, before the session management network element performs conversion, the parameter information may be encapsulated in the TSCAC, and after the conversion, the parameter information may be encapsulated in time sensitive communication assistance information (time sensitive communication assistance information, TSCAI).

In some embodiments, S1002 may include: The session management network element sends the parameter information to the access network device. Correspondingly, the access network device receives the parameter information from the session management network element.

Optionally, the session management network element may send the parameter information to the access network device via a mobility management network element.

S1003: The access network device determines scheduling and orchestration information based on the parameter information.

It should be noted that, for a specific implementation of the scheduling and orchestration information, reference may be made to the corresponding descriptions in S501. For a specific implementation of S1003, reference may be made to S504. Details are not described herein again.

S1004: The access network device sends the scheduling and orchestration information to the terminal device. Correspondingly, the terminal device receives the scheduling and orchestration information from the access network device.

It should be noted that, for a specific implementation of S1004, reference may be made to S507. Details are not described herein again.

It should be noted that S1001 to S1004 may all be optional steps.

S1005: The terminal device determines a time offset value based on the scheduling and orchestration information and time of arrival.

It should be noted that, for specific implementations of the time of arrival and the time offset value, reference may be made to corresponding descriptions in S501. For a specific implementation of S1005, reference may be made to the implementation of S501 (an implementation corresponding to a case in which the communication device is a terminal device). Details are not described herein again.

S1006: The terminal device sends the time offset value to the application network element. Correspondingly, the application network element receives the time offset value from the terminal device.

It should be noted that, for a specific implementation of S1006, reference may be made to the implementation of S502 (an implementation corresponding to a case in which the communication device is a terminal device). Details are not described herein again.

It should be noted that in the uplink transmission scenario, the time offset value may alternatively be determined by the access network device based on the scheduling and orchestration information and the time of arrival. For a specific implementation, reference may be made to the implementation of S501 (an implementation corresponding to a case in which the communication device is an access network device). The access network device sends the time offset value to the application network element, and the terminal device in S1006 may be replaced with the access network device. In this way, the method in FIG. 10A and FIG. 10B may not include S1004 and S1005.

S1007: The application network element determines a packet sending moment based on the time offset value.

It should be noted that, for a specific implementation of S1007, reference may be made to the implementation of S503. Details are not described herein again.

S1008: The application network element sends the packet sending moment to the industrial device. Correspondingly, the industrial device receives the packet sending moment from the application network element.

In this way, the industrial device may send a data packet based on the packet sending moment, so that a moment at which the data packet arrives at the communication device is aligned with a scheduling moment, thereby implementing zero-delay transmission over an air interface.

S1009: The application network element sends the time offset value to the industrial device. Correspondingly, the industrial device receives the time offset value from the application network element.

For example, after receiving the time offset value, the application network element may send the time offset value to the I/O device or the PLC device.

S1010: The industrial device determines a packet sending moment based on the time offset value.

It should be noted that, for a specific implementation of S1010, reference may be made to the specific implementation of S503 in which the application network element determines the packet sending moment based on the time offset value, provided that application network element is replaced with industrial device. Details are not described herein again.

It should be noted that S1007 and S1008 may be a solution parallel with that of S1009 and S1010. For example, the application network element determines the packet sending moment and sends the packet sending moment to the industrial device (refer to S1007 and S1008), or the industrial device determines the packet sending moment based on the time offset value received from the application network element (refer to S1009 and S1010).

S1011: The industrial device sends a notification message to the application network element. Correspondingly, the application network element receives the notification message from the industrial device.

It should be noted that S1011 may be an optional step. For example, after performing S1010, the industrial device may perform S1011. For another example, after performing S1008, the industrial device may not perform S1011.

Optionally, the notification message may indicate whether the packet sending moment is successfully determined.

Optionally, the notification message may include packet sending effective time, and the packet sending effective time may indicate effective time of the packet sending moment.

For example, the packet sending effective time indicates a moment c, which means that the industrial network element starts to send the data packet based on the packet sending moment only at the moment c.

In this way, the industrial device may notify the application network element of whether orchestration is successful and effective time of an adjusted packet sending moment.

In a possible design method, the communication method provided in this embodiment of this application may further include: The industrial device sends a third data packet based on the packet sending moment.

In this way, the industrial device may send an uplink data packet or a downlink data packet based on the packet sending moment, so that a moment at which the data packet arrives at the communication device is aligned with a scheduling moment, thereby implementing zero-delay transmission over an air interface.

S1012: The application network element sends updated parameter information to the access network device. Correspondingly, the access network device receives the updated parameter information from the application network element.

Optionally, the updated parameter information may include updated service flow time of arrival and/or effective time of the updated service flow time of arrival.

Optionally, the updated parameter information may be determined after the application network element receives the time offset value.

For example, the updated service flow time of arrival may be determined by the application network element based on the service flow time of arrival and the time offset value.

For example, a moment indicated by the updated service flow time of arrival is equal to a moment indicated by the service flow time of arrival plus the time offset value.

For example, the service flow time of arrival may indicate a moment at which a second data packet in the service flow arrives at the communication device, the communication device may be a terminal device or an access network device, and the updated service flow time of arrival may indicate an updated moment at which the second data packet in the service flow arrives at the communication device. For example, when the service flow is a periodic service flow, the application network element may determine the updated service flow time of arrival based on the service flow time of arrival and the time offset value.

Optionally, the effective time of the updated service flow time of arrival may indicate the effective time of the updated service flow time of arrival.

In some embodiments, the updated parameter information may further include one or more of the following: service flow survival time, a service flow direction, watchdog time, a time domain parameter, a delay from a transmitter terminal device to a user plane network element, uplink and downlink flow forwarding information, a service packet size, a topological relationship, and a communication feature.

In other words, parameters such as the service flow survival time, the service flow direction, the watchdog time, the time domain parameter, the delay from the transmitter terminal device to the user plane network element, the uplink and downlink flow forwarding information, the service packet size, the topological relationship, and the communication feature may further be updated. This is not limited in this application.

In this way, after receiving the updated service flow time of arrival, the access network device may determine updated scheduling and orchestration information for a next data packet based on the updated parameter information (refer to S504). Scheduling and orchestration may be performed for a plurality of times. For example, S504 may be performed for a plurality of times, to improve a matching degree between a data packet sending moment and a scheduling moment, and improve precision.

In a downlink transmission scenario, the application network element may send the updated parameter information to the access network device via a network element, for example, a network exposure network element, a delay clock network element, a policy control network element, a session management network element, and/or a mobility management network element.

For example, the application network element may send the updated parameter information to the session management network element. Optionally, the session management network element sends the updated parameter information to the access network device via the mobility management network element.

It should be noted that, for a specific implementation of S1012, reference may be made to the implementation of S1002, provided that parameter information is replaced with updated parameter information. Details are not described herein again. In addition, an execution occasion of S1012 is not limited in this application. For example, S1012 may be performed after S1007. For another example, S1012 may be performed after S1011.

In some embodiments, that the application network element sends the updated parameter information to the access network device in S1012 may include: The application network element periodically sends the updated parameter information to the access network device, or the application network element sends the updated parameter information to the access network device when the time offset value is greater than a fourth threshold.

Optionally, the fourth threshold may be preconfigured. The fourth threshold may be equal to or not equal to a third threshold. This is not limited in this application.

In this way, sending the updated parameter information by the application network element to the access network device may be controlled, to avoid a case in which the application network element frequently sends the updated parameter information to the access network device, thereby avoiding frequent scheduling and orchestration by the access network device.

In some embodiments, after receiving the updated parameter information, the access network device may perform orchestration confirmation, for example, store the updated parameter information.

It should be noted that S1007 to S1012 may all be optional steps.

According to the communication method shown in FIG. 10A and FIG. 10B, in the uplink transmission scenario, the terminal device determines the time offset value based on the scheduling moment and the time of arrival, and sends the time offset value to the application network element. The application network element adjusts the data packet sending moment based on the time offset value. The time of arrival indicates a moment at which a first data packet in the service flow arrives at the terminal device, and the time offset value is a difference between the moment at which the first data packet arrives at the terminal device and the scheduling moment. In this way, the data packet sending moment is obtained through adjustment based on the difference between the time of arrival and the scheduling moment. A moment at which a data packet arrives at an air interface may be adjusted by adjusting the data packet sending moment, so that the data packet is scheduled in short time or immediately after arriving at the communication device, thereby reducing an air interface transmission delay.

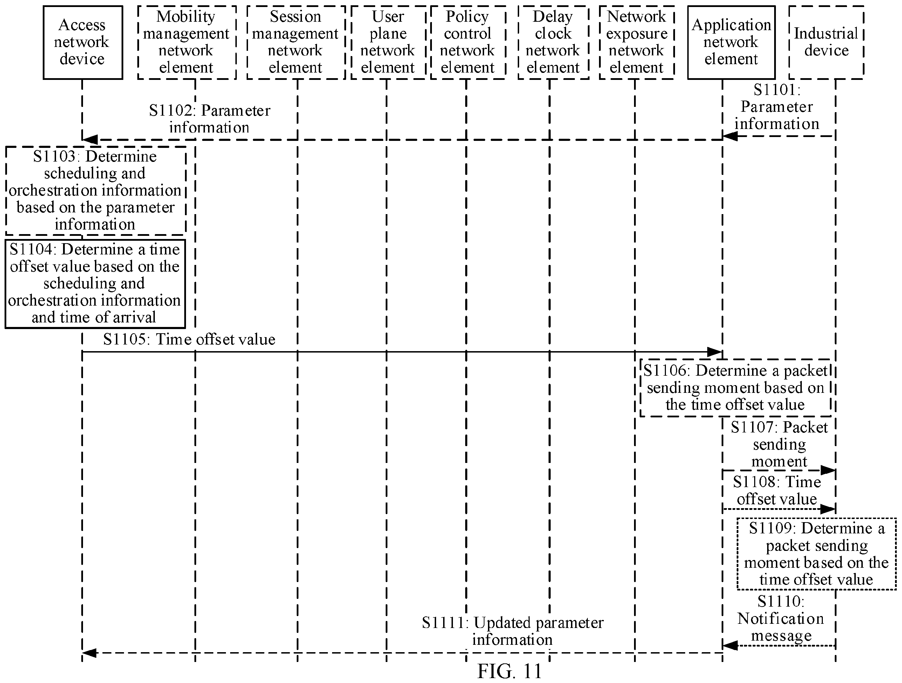

FIG. 11 is a schematic flowchart of another communication method according to an embodiment of this application. In FIG. 11, a downlink transmission scenario in which a terminal device interacts with a network is used as an example to specifically describe the communication methods shown in FIG. 5a and FIG. 5b.

As shown in FIG. 11, the communication method includes the following steps.

S1101: An industrial device sends parameter information to an application network element. Correspondingly, the application network element receives the parameter information from the industrial device.

For example, the industrial device may include an I/O device, a PLC device, or the like.

Optionally, the parameter information may include a service periodicity and/or service flow time of arrival.

In some embodiments, the parameter information may further include one or more of the following: service flow survival time, a service flow direction, watchdog time, a time domain parameter, a service packet size, a topological relationship, and a communication feature.

Optionally, the parameter information may be encapsulated in a TSCAC.

It should be noted that, for a specific implementation of the parameter information, reference may be made to the corresponding descriptions in S504. Details are not described herein again.

S1102: The application network element sends the parameter information to an access network device. Correspondingly, the access network device receives the parameter information from the application network element.

It should be noted that, for a specific implementation of S1102, reference may be made to S1002. Details are not described herein again.

S1103: The access network device determines scheduling and orchestration information based on the parameter information.

It should be noted that, for a specific implementation of the scheduling and orchestration information, reference may be made to the corresponding descriptions in S501. For a specific implementation of S1103, reference may be made to S504. Details are not described herein again.

It should be noted that S1101 to S1103 may all be optional steps.

S1104: The access network device determines a time offset value based on the scheduling and orchestration information and the time of arrival.

It should be noted that, for specific implementations of the time of arrival and the time offset value, reference may be made to corresponding descriptions in S501. For a specific implementation of S1104, reference may be made to the implementation of S501 (an implementation corresponding to a case in which the communication device is an access network device). Details are not described herein again.

S1105: The access network device sends the time offset value to the application network element. Correspondingly, the application network element receives the time offset value from the access network device.

It should be noted that, for a specific implementation of S1105, reference may be made to the implementation of S502 (an implementation corresponding to a case in which the communication device is an access network device). Details are not described herein again.

S1106: The application network element determines a packet sending moment based on the time offset value.

It should be noted that, for a specific implementation of S1106, reference may be made to the implementation of S503. Details are not described herein again.

In some embodiments, the communication method shown in FIG. 11 may further include S1107 to S1111. For specific implementations of S1107 to S1111, reference may be made to the implementations of S1008 to S1012. Details are not described herein again.

According to the communication method shown in FIG. 11, in the downlink transmission scenario, the access network device determines the time offset value based on the scheduling moment and the time of arrival, and sends the time offset value to the application network element. The application network element adjusts the data packet sending moment based on the time offset value. The time of arrival indicates a moment at which a first data packet in the service flow arrives at the access network device, and the time offset value is a difference between the moment at which the first data packet arrives at the access network device and the scheduling moment. In this way, the data packet sending moment is obtained through adjustment based on the difference between the time of arrival and the scheduling moment. A moment at which a data packet arrives at an air interface may be adjusted by adjusting the data packet sending moment, so that the data packet is scheduled in short time or immediately after arriving at the communication device, thereby reducing an air interface transmission delay.

FIG. 12A, FIG. 12B, and FIG. 12C are a schematic flowchart of still another communication method according to an embodiment of this application. In FIG. 12A, FIG. 12B, and FIG. 12C, a scenario in which a transmitter terminal device interacts with a receiver terminal device is used as an example to specifically describe the communication methods shown in FIG. 5a and FIG. 5b. With reference to FIG. 4, a terminal device shown in FIG. 12A, FIG. 12B, and FIG. 12C may be a transmitter terminal device, for example, a terminal device 1, and an industrial device may be an I/O device 1.

As shown in FIG. 12A, FIG. 12B, and FIG. 12C, the communication method includes the following steps.

S1201: The industrial device sends uplink parameter information to an application network element. Correspondingly, the application network element receives the uplink parameter information from the industrial device.

For example, the industrial device may include an I/O device, a PLC device, or the like.

Optionally, the uplink parameter information may include an uplink service periodicity and/or uplink service flow time of arrival.

In some embodiments, the uplink parameter information may further include one or more of the following: service flow survival time, a service flow direction, watchdog time, a time domain parameter, a delay from the transmitter terminal device to a user plane network element, uplink and downlink flow forwarding information, a service packet size, a topological relationship, and a communication feature.

Optionally, the uplink parameter information may be encapsulated in a TSCAC.

It should be noted that, for a specific implementation of the uplink parameter information, reference may be made to the corresponding descriptions of the parameter information in S504. Details are not described herein again.

S1202: The application network element sends the uplink parameter information to an access network device. Correspondingly, the access network device receives the uplink parameter information from the application network element.

It should be noted that, for a specific implementation of S1202, reference may be made to S1002. Details are not described herein again.

In some embodiments, S1202 may further include: A session management network element binds a PDU session of the transmitter terminal device to a PDU session of the receiver terminal device.

For example, the session management network element may determine, based on a case in which the service flow is a service flow between the transmitter terminal device and the receiver terminal device, the PDU session corresponding to the transmitter terminal device, and bind the PDU session corresponding to the transmitter terminal device to the PDU session corresponding to the receiver terminal device. In this way, both a packet sending moment corresponding to uplink and a packet sending moment corresponding to downlink may be adjusted, to reduce an air interface transmission delay.

For specific implementations of S1203 to S1212, refer to the implementations of S1003 to S1013, provided that, to distinguish an uplink transmission process from a downlink transmission process, parameter information may be replaced with uplink parameter information, scheduling and orchestration information may be replaced with uplink scheduling and orchestration information, time of arrival may be replaced with uplink time of arrival, time offset value may be replaced with uplink time offset value, and packet sending moment may be replaced with uplink packet sending moment. Details are not described herein again.

It should be noted that, in the scenario in which the transmitter terminal device interacts with the receiver terminal device, the packet sending moment corresponding to the uplink may be adjusted (S1201 to S1212 may be performed, and for specific implementations, refer to the corresponding descriptions), and the packet sending moment corresponding to the downlink may further be adjusted. In this case, the communication method shown in FIG. 12A, FIG. 12B, and FIG. 12C may further include the following S1213 to S1219.

S1213: The access network device determines downlink scheduling and orchestration information based on downlink parameter information.

Optionally, the downlink parameter information may include: downlink service flow time of arrival and/or effective time of the downlink service flow time of arrival.

For example, the downlink service flow time of arrival is a moment at which a data packet in the downlink service flow arrives at the access network device (for example, a downlink ingress of the access network device) in the downlink transmission process.

Optionally, the effective time of the downlink service flow time of arrival may indicate the effective time of the downlink service flow time of arrival.

In some embodiments, the downlink parameter information may further include one or more of the following: service flow survival time, a service flow direction, watchdog time, a time domain parameter, a delay from the transmitter terminal device to a user plane network element, uplink and downlink flow forwarding information, a service packet size, a topological relationship, and a communication feature. For a specific implementation, refer to the corresponding descriptions in the method shown in FIG. 5b. Details are not described herein again.

In some embodiments, the downlink parameter information may be determined based on updated parameter information.

Optionally, the updated parameter information (obtained in step S1212) may include: updated service flow time of arrival and/or effective time of updated service flow time of arrival.

For example, the downlink service flow time of arrival may be determined based on the updated service flow time of arrival.

For example, the effective time of the downlink service flow time of arrival may be determined based on the effective time of the updated service flow time of arrival.

In some embodiments, the updated parameter information may further include one or more of the following: service flow survival time, a service flow direction, watchdog time, a time domain parameter, a delay from a transmitter terminal device to a user plane network element, uplink and downlink flow forwarding information, a service packet size, a topological relationship, and a communication feature.

In some embodiments, the updated service flow time of arrival may be referred to as updated uplink service flow time of arrival.

In a possible design method, the updated service flow time of arrival includes the updated uplink service flow time of arrival. The communication method provided in this embodiment of this application may further include: The access network device determines the downlink service flow time of arrival based on the updated uplink service flow time of arrival.

With reference to FIG. 4, in the scenario in which the transmitter terminal device interacts with the receiver terminal device, the updated uplink service flow time of arrival may be an updated moment at which the service flow transmitted via the terminal device 1 arrives at the uplink egress of the terminal device 1. The downlink service flow time of arrival may be an updated moment at which the service flow arrives at the downlink ingress of the access network device.

Optionally, the access network device may determine the downlink service flow time of arrival based on the updated uplink service flow time of arrival, the delay from the transmitter terminal device to the user plane network element, and a delay from the user plane network element to the access network device. With reference to FIG. 4, the delay from the transmitter terminal device to the user plane network element may be a delay from the terminal device 1 to the user plane network element.

For example, the downlink service flow time of arrival is equal to the updated uplink service flow time of arrival plus the delay from the transmitter terminal device to the user plane network element plus the delay from the user plane network element to the access network device.

It should be noted that, for a specific implementation of the downlink scheduling and orchestration information, reference may be made to the corresponding descriptions of the scheduling and orchestration information in S501. For a specific implementation of S1213, reference may be made to S504, provided that parameter information is replaced with downlink parameter information, and a parameter in the parameter information is replaced with a corresponding parameter in the downlink parameter information. Details are not described herein again.

S1214: The access network device determines a downlink time offset value based on the downlink scheduling and orchestration information and downlink time of arrival.

It should be noted that, for specific implementations of the downlink time of arrival and the downlink time offset value, reference may be made to the corresponding descriptions of the time of arrival and the time offset value (the downlink scenario) in S501. For a specific implementation of S1214, reference may be made to the implementation of S501 (an implementation corresponding to a case in which the communication device is an access network device), provided that service flow time of arrival is replaced with downlink service flow time of arrival, scheduling and orchestration information is replaced with downlink scheduling and orchestration information, and time of arrival is replaced with downlink time of arrival. Details are not described herein again.

S1215: The access network device sends the downlink time offset value to the application network element. Correspondingly, the application network element receives the downlink time offset value from the access network device.

It should be noted that, for a specific implementation of S1215, reference may be made to the implementation of S502 (an implementation corresponding to a case in which the communication device is an access network device). Details are not described herein again.

S1216: The application network element determines a downlink packet sending moment based on the downlink time offset value.

It should be noted that, for a specific implementation of S1216, reference may be made to the implementation of S503. Details are not described herein again.

S1217: The application network element sends the downlink packet sending moment to the user plane network element. Correspondingly, the user plane network element receives the downlink packet sending moment from the application network element.

For example, with reference to FIG. 4, after receiving a data packet transmitted to the user plane network element via the terminal device 1, the user plane network element may send the data packet to the access network device based on the downlink packet sending moment, to reduce the air interface transmission delay. For example, a moment at which the data packet arrives at the access network device is the same as a scheduling moment, thereby implementing zero-delay transmission over an air interface.

S1218: The access network device sends the downlink time offset value to the user plane network element. Correspondingly, the user plane network element receives the downlink time offset value from the access network device.

For example, the access network device may send the downlink time offset value to the user plane network element via a mobility management network element and the session management network element.

Alternatively, optionally, the user plane network element may receive the downlink time offset value from the application network element. How the user plane network element obtains the downlink time offset value is not limited in this embodiment of this application.

S1219: The user plane network element determines the downlink packet sending moment based on the downlink time offset value.

It should be noted that, for a specific implementation of S1219, reference may be made to the implementation of S1010, provided that time offset value is replaced with downlink time offset value, and packet sending moment is replaced with downlink packet sending moment. Details are not described herein again.

It should be noted that S1218 and S1219 may be a solution parallel with that of S1215 to S1217, or S1218 and S1219 may be used in combination with S1215 to S1217.

For example, S1218 may be performed in a process of S1215, and both the user plane network element and the application network element receive the downlink time offset value. For example, in S1215, the access network device may send the downlink time offset value to the session management network element via the mobility management network element, the session management network element may send the downlink time offset value to the user plane network element, and the session management network element may send the downlink time offset value to the application network element via a policy control network element, a delay clock network element, a network exposure network element, and the like. Optionally, the user plane network element and/or the application network element may determine the downlink packet sending moment.

According to the communication method shown in FIG. 12A, FIG. 12B, and FIG. 12C, in the scenario in which the transmitter terminal device interacts with the receiver terminal device, the time offset value may be determined based on the scheduling and orchestration information and the time of arrival corresponding to the uplink, the packet sending moment corresponding to the uplink may be determined based on the time offset value, the downlink time offset value may be determined based on the downlink scheduling and orchestration information and the downlink time of arrival, and the packet sending moment corresponding to the downlink may be determined based on the downlink time offset value. In this way, the moment at which the data packet arrives at the air interface is adjusted by adjusting the data packet sending moment, so that the data packet is scheduled in short time or immediately after arriving at the communication device. Therefore, in the scenario in which the transmitter terminal device interacts with the receiver terminal device, an uplink data packet is sent based on the packet sending moment corresponding to the uplink, and a downlink data packet is sent based on the packet sending moment corresponding to the downlink, thereby reducing the air interface transmission delay.

In this application, unless otherwise specified, for same or similar parts in embodiments, reference may be made to each other. In embodiments of this application and the implementations/implementation methods in embodiments, unless otherwise specified or a logical collision occurs, terms and/or descriptions are consistent and may be mutually referenced between different embodiments and between the implementations/implementation methods in embodiments. Technical features in the different embodiments and the implementations/implementation methods in embodiments may be combined to form a new embodiment, implementation, or implementation method based on an internal logical relationship of the technical features. The following implementations of this application are not intended to limit the protection scope of this application.

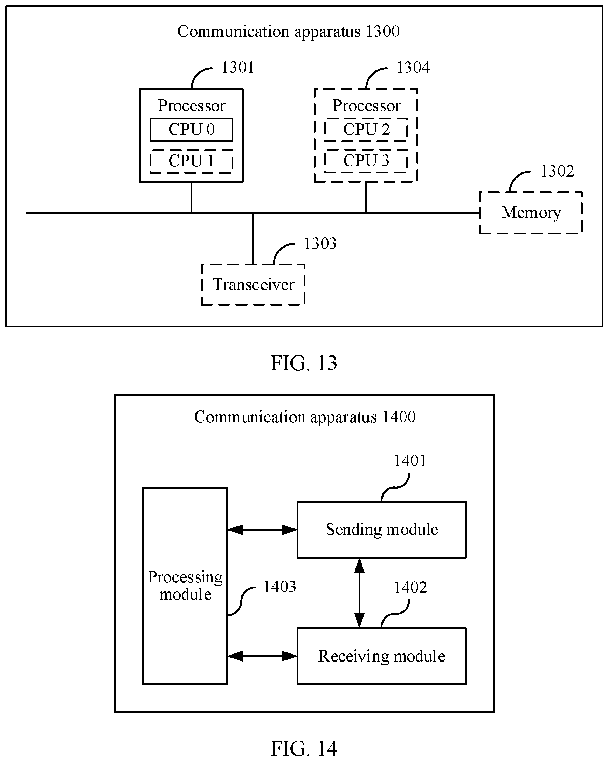

With reference to FIG. 5a to FIG. 12A, FIG. 12B, and FIG. 12C, the foregoing describes in detail the communication methods provided in embodiments of this application. With reference to FIG. 13 and FIG. 14, the following describes in detail communication apparatuses provided in embodiments of this application.

FIG. 13 is a diagram of a structure of a communication apparatus according to an embodiment of this application.

A communication apparatus 1300 may be an access network device, a terminal device, an application network element, or an end device, or may be a chip used in the access network device, the terminal device, the application network element, or the end device, or may be another component having a corresponding function. As shown in FIG. 13, the communication apparatus 1300 may include a processor 1301. Optionally, the communication apparatus 1300 may further include either or both of a memory 1302 and a transceiver 1303. The processor 1301 and either or both of the memory 1302 and the transceiver 1303 may be coupled, for example, may be connected through a communication bus; or the processor 1301 may be used independently.

The following specifically describes each component of the communication apparatus 1300 with reference to FIG. 13.

The processor 1301 is a control center of the communication apparatus 1300, and may be one processor or may be a collective name of a plurality of processing elements. For example, the processor 1301 is one or more central processing units (central processing units, CPUs), or may be an application-specific integrated circuit (application-specific integrated circuit, ASIC), or is configured as one or more integrated circuits for implementing embodiments of this application, for example, one or more microprocessors (digital signal processors, DSPs) or one or more field programmable gate arrays (field programmable gate arrays, FPGAs).

The processor 1301 may perform various functions of the communication apparatus 1300 by running or executing a software program stored in the memory 1302 and invoking data stored in the memory 1302.

In a specific implementation, in an embodiment, the processor 1301 may include one or more CPUs, for example, a CPU 0 and a CPU 1 shown in FIG. 13.

During specific implementation, in an embodiment, the communication apparatus 1300 may alternatively include a plurality of processors, for example, the processor 1301 and a processor 1304 shown in FIG. 13. Each of the processors may be a single-core processor (single-CPU) or may be a multi-core processor (multi-CPU). The processor herein may be one or more communication devices, circuits, and/or processing cores configured to process data (for example, computer program instructions).

Optionally, the memory 1302 may be a read-only memory (read-only memory, ROM) or another type of static storage communication device that can store static information and instructions, or a random access memory (random access memory, RAM) or another type of dynamic storage communication device that can store information and instructions, or may be an electrically erasable programmable read-only memory (electrically erasable programmable read-only memory, EEPROM), a compact disc read-only memory (compact disc read-only memory, CD-ROM) or another compact disc storage, an optical disc storage (including a compressed optical disc, a laser disc, an optical disc, a digital versatile disc, a Blu-ray disc, and the like), a magnetic disk storage medium or another magnetic storage communication device, or any other medium that can be used to carry or store expected program code in a form of instructions or a data structure and that can be accessed by a computer. However, this is not limited thereto. The memory 1302 may be integrated with the processor 1301, or may exist independently, and is coupled to the processor 1301 through an input/output port (not shown in FIG. 13) of the communication apparatus 1300. This is not specifically limited in this embodiment of this application.

For example, the input port may be configured to implement a receiving function performed by the communication device (the communication device may be an access network device or a terminal device), the access network device, the terminal device, the application network element, or the end device in any one of the foregoing method embodiments, and the output port may be configured to implement a sending function performed by the communication device (the communication device may be an access network device or a terminal device), the access network device, the terminal device, the application network element, or the end device in any one of the foregoing method embodiments.

The memory 1302 may be configured to store a software program for performing the solutions of this application, and the processor 1301 controls execution. For a specific implementation, refer to the following method embodiments. Details are not described herein again.

Optionally, the transceiver 1303 is configured to communicate with another communication apparatus. For example, when the communication apparatus 1300 is an access network device, the transceiver 1303 may be configured to communicate with a terminal device, an application network element, and/or an end device. For another example, when the communication apparatus 1300 is a terminal device, the transceiver 1303 may be configured to communicate with an access network device, an end device, and/or the like. For another example, when the communication apparatus 1300 is an application network element, the transceiver 1303 may be configured to communicate with a network exposure network element, an end device, a policy control network element, and/or an access network device.

In addition, the transceiver 1303 may include a receiver and a transmitter (not separately shown in FIG. 13). The receiver is configured to implement a receiving function, and the transmitter is configured to implement a sending function. The transceiver 1303 may be integrated with the processor 1301, or may exist independently, and is coupled to the processor 1301 through an input/output port (not shown in FIG. 13) of the communication apparatus 1300. This is not specifically limited in this embodiment of this application.

It should be noted that, the structure of the communication apparatus 1300 shown in FIG. 13 does not constitute a limitation on the communication apparatus. An actual communication apparatus may include more or fewer components than those shown in the figure, combine some components, or have different component arrangements.

The actions of the communication device (which may be an access network device or a terminal device) in FIG. 5a to FIG. 12A, FIG. 12B, and FIG. 12C may be performed by the communication device as instructed by the processor 1301 in the communication apparatus 1300 shown in FIG. 13 by invoking application program code stored in the memory 1302.

The actions of the application network element in FIG. 5a to FIG. 12A, FIG. 12B, and FIG. 12C may be performed by the application network element as instructed by the processor 1301 in the communication apparatus 1300 shown in FIG. 13 by invoking application program code stored in the memory 1302. This is not limited in this embodiment.

The actions of the terminal device in FIG. 5a to FIG. 12A, FIG. 12B, and FIG. 12C may be performed by the terminal device as instructed by the processor 1301 in the communication apparatus 1300 shown in FIG. 13 by invoking application program code stored in the memory 1302. This is not limited in this embodiment.

The actions of the access network device in FIG. 5a to FIG. 12A, FIG. 12B, and FIG. 12C may be performed by the access network device as instructed by the processor 1301 in the communication apparatus 1300 shown in FIG. 13 by invoking application program code stored in the memory 1302. This is not limited in this embodiment.

The actions of the industrial device in FIG. 5a to FIG. 12A, FIG. 12B, and FIG. 12C may be performed by the end device as instructed by the processor 1301 in the communication apparatus 1300 shown in FIG. 13 by invoking application program code stored in the memory 1302. This is not limited in this embodiment.

When the communication apparatus is a communication device, the communication apparatus 1300 may perform any one or more possible design manners of the communication device in the foregoing method embodiments.

When the communication apparatus is an access network device, the communication apparatus 1300 may perform any one or more possible design manners of the access network device in the foregoing method embodiments.

When the communication apparatus is a terminal device, the communication apparatus 1300 may perform any one or more possible design manners of the terminal device in the foregoing method embodiments.

When the communication apparatus is an application network element, the communication apparatus 1300 may perform any one or more possible design manners of the application network element in the foregoing method embodiments.

When the communication apparatus is an end device, the communication apparatus 1300 may perform any one or more possible design manners of the industrial device in the foregoing method embodiments.

It should be noted that all related content of the steps in the foregoing method embodiments may be cited in function description of corresponding functional modules. Details are not described herein again.

FIG. 14 is a diagram of a structure of another communication apparatus according to an embodiment of this application. For ease of description, FIG. 14 shows only main components of the communication apparatus.

A communication apparatus 1400 may include a sending module 1401, a receiving module 1402, and/or a processing module 1403.

For example, when the communication apparatus 1400 is the communication device in the foregoing method embodiments, the communication apparatus 1400 may include the sending module 1401 and the processing module 1403, and may further include the receiving module 1402.

For example, when the communication apparatus 1400 is the access network device in the foregoing method embodiments, the communication apparatus 1400 may include the sending module 1401 and the receiving module 1402, and may further include the processing module 1403.

For example, when the communication apparatus 1400 is the application network element in the foregoing method embodiments, the communication apparatus 1400 may include the receiving module 1402 and the processing module 1403, and may further include the sending module 1401; or the communication apparatus 1400 may include the receiving module 1402 and the sending module 1401, and may further include the processing module 1403.

For example, when the communication apparatus 1400 is the industrial device in the foregoing method embodiments, the communication apparatus 1400 may include the receiving module 1402 and the processing module 1403, and may further include the sending module 1401.

The communication apparatus 1400 may be the communication device (which may be an access network device or a terminal device), the access network device, the application network element, or the end device in the foregoing method embodiments. The sending module 1401 may also be referred to as a sending unit, and is configured to implement a sending function performed by the communication device (which may be an access network device or a terminal device), the access network device, the application network element, or the end device in any one of the foregoing method embodiments. The receiving module 1402 may also be referred to as a receiving unit, and is configured to implement a receiving function performed by the communication device (which may be an access network device or a terminal device), the access network device, the application network element, or the end device in any one of the foregoing method embodiments.

It should be noted that the sending module 1401 and the receiving module 1402 may be separately disposed, or may be integrated into one module, namely, a transceiver module. Specific implementations of the receiving module and the sending module are not specifically limited in this application. The transceiver module may include a transceiver circuit, a transceiver machine, a transceiver, or a communication interface.

Optionally, the communication apparatus 1400 may further include a storage module (not shown in FIG. 14), and the storage module stores a program or instructions. When the processing module 1403 executes the program or the instructions, the communication apparatus 1400 is enabled to perform the method in any one of the foregoing method embodiments.

The processing module 1403 may be configured to implement a processing function performed by the communication device (which may be an access network device or a terminal device), the access network device, the application network element, or the end device in any one of the foregoing method embodiments. The processing module 1403 may be a processor.

In this embodiment, the communication apparatus 1400 is presented in a form of functional modules obtained through division in an integrated manner. The module herein may be an ASIC, a circuit, a processor that executes one or more software or firmware programs, a memory, an integrated logic circuit, and/or another component capable of providing the foregoing functions. In a simple embodiment, a person skilled in the art may figure out that the communication apparatus 1400 may be in a form of the communication apparatus 1300 shown in FIG. 13.

For example, the processor 1301 in the communication apparatus 1300 shown in FIG. 13 may invoke computer-executable instructions stored in the memory 1302, so that the communication method in the foregoing method embodiments is performed.

Specifically, functions/implementation processes of the processing module 1403 and the storage module in FIG. 14 may be implemented by the transceiver 1303 in the communication apparatus 1300 shown in FIG. 13. A function/an implementation process of the processing module 1403 in FIG. 14 may be implemented by the processor 1301 in the communication apparatus 1300 shown in FIG. 13 by invoking the computer-executable instructions stored in the memory 1302.

The communication apparatus 1400 provided in this embodiment may perform the foregoing communication methods. Therefore, for technical effects that can be achieved by the communication apparatus 1400, refer to the foregoing method embodiments. Details are not described herein again.

In a possible design solution, the communication apparatus 1400 shown in FIG. 14 is applicable to the system shown in FIG. 1, and performs a function of the communication device in the communication method in any one of the foregoing method embodiments.

The processing module 1403 is configured to determine a time offset value based on scheduling and orchestration information and time of arrival. The sending module 1401 is configured to send the time offset value to an application network element. The scheduling and orchestration information indicates a scheduling moment, the time of arrival indicates a moment at which a first data packet in a service flow arrives at the communication apparatus 1400, and the time offset value is a difference between the moment at which the first data packet arrives at the communication apparatus 1400 and the scheduling moment.

In a possible design manner, the time of arrival may be received by the communication apparatus 1400 from the application network element.

In a possible design manner, the time of arrival may be determined by the communication apparatus 1400 based on the moment at which the first data packet arrives at the communication apparatus 1400.

In a possible design manner, the communication apparatus 1400 is an access network device, the scheduling and orchestration information is determined by the access network device based on parameter information, the parameter information includes a service periodicity and/or service flow time of arrival, and the service flow time of arrival indicates a moment at which a second data packet in the service flow arrives at the communication apparatus 1400.

In a possible design manner, that the scheduling and orchestration information is determined by the access network device based on parameter information may include: The scheduling and orchestration information is determined by the access network device based on parameter information corresponding to at least two service flows.

In a possible design manner, the at least two service flows may include a first service flow and a second service flow, where a difference between service flow time of arrival corresponding to the first service flow and service flow time of arrival corresponding to the second service flow is less than or equal to a first threshold, and a scheduling moment corresponding to the first service flow and a scheduling moment corresponding to the second service flow are greater than or equal to a second threshold.

In a possible design manner, the parameter information may further include one or more of the following: service flow survival time, a service flow direction, watchdog time, a time domain parameter, a delay from a transmitter terminal device to a user plane network element, uplink and downlink flow forwarding information, a service packet size, a topological relationship, and a communication feature.

In a possible design manner, the communication apparatus 1400 may further include the receiving module 1402. The receiving module 1402 is configured to receive the parameter information from the application network element.

In a possible design manner, the communication apparatus 1400 is an access network device, and the processing module 1403 is further configured to allocate a resource based on the scheduling and orchestration information.

In a possible design manner, the communication apparatus 1400 is a terminal device, and the receiving module 1402 is further configured to receive the scheduling and orchestration information from an access network device.

In a possible design manner, the receiving module 1402 is further configured to receive updated parameter information from the application network element. The updated parameter information may include updated service flow time of arrival and/or effective time of the updated service flow time of arrival.

In a possible design manner, the updated service flow time of arrival includes updated uplink service flow time of arrival, the communication apparatus 1400 is an access network device, and the processing module 1403 is further configured to determine downlink service flow time of arrival based on the updated uplink service flow time of arrival.

In a possible design manner, the sending module 1401 is further configured to send the time offset value to the application network element when the time offset value is greater than a third threshold.

It should be noted that, the receiving module 1402 and the sending module 1401 may be separately disposed, or may be integrated into one module, namely, a transceiver module (not shown in FIG. 14). Specific implementations of the receiving module 1402 and the sending module 1401 are not specifically limited in this application.

Optionally, the communication apparatus 1400 may further include a storage module (not shown in FIG. 14), and the storage module stores a program or instructions. When the processing module 1403 executes the program or the instructions, the communication apparatus 1400 is enabled to perform a function of the communication device in the communication method in any one of the foregoing method embodiments.

It should be noted that the communication apparatus 1400 may be a communication device, for example, an access network device or a terminal device, or may be a chip (system) or another part or component that may be disposed in the communication device. This is not limited in this application.

In addition, for technical effects of the communication apparatus 1400, refer to the technical effects of the communication methods shown in FIG. 5a to FIG. 12A, FIG. 12B, and FIG. 12C. Details are not described herein again.

In another possible design solution, the communication apparatus 1400 shown in FIG. 14 is applicable to the system shown in FIG. 1, and performs a function of the access network device in the communication method in any one of the foregoing method embodiments.

The receiving module 1402 is configured to receive a time offset value from a terminal device. The time offset value is a difference between a moment at which a first data packet in a service flow arrives at the terminal device and a scheduling moment.

The sending module 1401 is configured to send the time offset value to an application network element.

In a possible design manner, the communication apparatus 1400 may further include the processing module 1403. The processing module 1403 is configured to determine scheduling and orchestration information based on parameter information. The parameter information may include a service periodicity and/or service flow time of arrival, the service flow time of arrival indicates a moment at which a second data packet in the service flow arrives at the terminal device, and the scheduling and orchestration information indicates the scheduling moment.

In a possible design manner, the parameter information may further include one or more of the following: service flow survival time, a service flow direction, watchdog time, a time domain parameter, a delay from a transmitter terminal device to a user plane network element, uplink and downlink flow forwarding information, a service packet size, a topological relationship, and a communication feature.

In a possible design manner, the processing module 1403 is configured to determine, based on parameter information respectively corresponding to at least two service flows, scheduling and orchestration information respectively corresponding to the at least two service flows.

In a possible design manner, the at least two service flows may include a first service flow and a second service flow, where a difference between service flow time of arrival corresponding to the first service flow and service flow time of arrival corresponding to the second service flow is less than or equal to a first threshold, and a scheduling moment corresponding to the first service flow and a scheduling moment corresponding to the second service flow are greater than or equal to a second threshold.

In a possible design manner, the receiving module 1402 is further configured to receive the parameter information from the application network element.

In a possible design manner, the sending module 1401 is further configured to send the scheduling and orchestration information to the terminal device.

In a possible design manner, the processing module 1403 is further configured to allocate a resource based on the scheduling and orchestration information.

In a possible design manner, the receiving module 1402 is further configured to receive updated parameter information from the application network element. The updated parameter information may include updated service flow time of arrival and/or effective time of the updated service flow time of arrival.

It should be noted that, the receiving module 1402 and the sending module 1401 may be separately disposed, or may be integrated into one module, namely, a transceiver module (not shown in FIG. 14). Specific implementations of the receiving module 1402 and the sending module 1401 are not specifically limited in this application.

Optionally, the communication apparatus 1400 may further include a storage module (not shown in FIG. 14), and the storage module stores a program or instructions. When the processing module 1403 executes the program or the instructions, the communication apparatus 1400 is enabled to perform a function of the access network device in the communication method in any one of the foregoing method embodiments.

It should be noted that the communication apparatus 1400 may be an access network device, or may be a chip (system) or another part or component that may be disposed in the access network device. This is not limited in this application.

In addition, for technical effects of the communication apparatus 1400, refer to the technical effects of the communication methods shown in FIG. 5a to FIG. 12A, FIG. 12B, and FIG. 12C. Details are not described herein again.

In still another possible design solution, the communication apparatus 1400 shown in FIG. 14 is applicable to the system shown in FIG. 1, and performs a function of the application network element in the communication method in any one of the foregoing method embodiments.

The receiving module 1402 is configured to receive a time offset value from a communication device. The processing module 1403 is configured to determine a packet sending moment based on the time offset value, or the sending module 1401 is configured to send the time offset value. The time offset value is a difference between a moment at which a first data packet in a service flow arrives at a communication device and a scheduling moment. The packet sending moment indicates a sending moment of a third data packet in the service flow.

In a possible design manner, the sending module 1401 is further configured to send updated parameter information to the communication device. The updated parameter information may include updated service flow time of arrival and/or effective time of the updated service flow time of arrival, and the updated service flow time of arrival indicates an updated moment at which a second data packet in the service flow arrives at the communication device.

In a possible design manner, the sending module 1401 is further configured to send parameter information to the communication device. The parameter information includes a service periodicity and/or service flow time of arrival, and the service flow time of arrival indicates a moment at which the second data packet in the service flow arrives at the communication device.

In a possible design manner, the parameter information may further include one or more of the following: service flow survival time, a service flow direction, watchdog time, a time domain parameter, a delay from a transmitter terminal device to a user plane network element, uplink and downlink flow forwarding information, a service packet size, a topological relationship, and a communication feature.

In a possible design manner, the receiving module 1402 is further configured to receive the parameter information from an end device.

In a possible design manner, the receiving module 1402 is further configured to receive a notification message from the end device. The notification message indicates whether the packet sending moment is successfully determined.

In a possible design manner, the notification message may include packet sending effective time, and the packet sending effective time may indicate effective time of the packet sending moment.

It should be noted that, the receiving module 1402 and the sending module 1401 may be separately disposed, or may be integrated into one module, namely, a transceiver module (not shown in FIG. 14). Specific implementations of the receiving module 1402 and the sending module 1401 are not specifically limited in this application.

Optionally, the communication apparatus 1400 may further include a storage module (not shown in FIG. 14), and the storage module stores a program or instructions. When the processing module 1403 executes the program or the instructions, the communication apparatus 1400 is enabled to perform a function of the application network element in the communication method in any one of the foregoing method embodiments. It should be noted that the communication apparatus 1400 may be an application network element, or may be a chip (system) or another part or component that may be disposed in the application network element. This is not limited in this application.

In addition, for technical effects of the communication apparatus 1400, refer to the technical effects of the communication methods shown in FIG. 5a to FIG. 12A, FIG. 12B, and FIG. 12C. Details are not described herein again.

In still another possible design solution, the communication apparatus 1400 shown in FIG. 14 is applicable to the system shown in FIG. 1, and performs a function of the end device in the communication method in any one of the foregoing method embodiments.

The receiving module 1402 is configured to receive a time offset value from an application network element. The processing module 1403 is configured to determine a packet sending moment based on the time offset value. The time offset value is a difference between a moment at which a first data packet in a service flow arrives at a communication device and a scheduling moment. The packet sending moment indicates a sending moment of a third data packet in the service flow.

In a possible design manner, the communication apparatus 1400 may further include the sending module 1401. The sending module 1401 is configured to send a notification message to the application network element. The notification message may indicate whether the packet sending moment is successfully determined.

In a possible design manner, the notification message includes packet sending effective time, and the packet sending effective time indicates effective time of the packet sending moment.

In a possible design manner, the sending module 1401 is further configured to send the third data packet based on the packet sending moment.

In a possible design manner, the sending module 1401 is further configured to send parameter information to the application network element. The parameter information may include a service periodicity and/or service flow time of arrival, and the service flow time of arrival indicates a moment at which a second data packet in the service flow arrives at the communication device.

In a possible design manner, the parameter information may further include one or more of the following: service flow survival time, a service flow direction, watchdog time, a time domain parameter, a delay from a transmitter terminal device to a user plane network element, uplink and downlink flow forwarding information, a service packet size, a topological relationship, and a communication feature.

It should be noted that, the receiving module 1402 and the sending module 1401 may be separately disposed, or may be integrated into one module, namely, a transceiver module (not shown in FIG. 14). Specific implementations of the receiving module 1402 and the sending module 1401 are not specifically limited in this application.

Optionally, the communication apparatus 1400 may further include a storage module (not shown in FIG. 14), and the storage module stores a program or instructions. When the processing module 1403 executes the program or the instructions, the communication apparatus 1400 is enabled to perform a function of the end device in the communication method in any one of the foregoing method embodiments.

It should be noted that the communication apparatus 1400 may be an end device, or may be a chip (system) or another part or component that may be disposed in the end device. This is not limited in this application.

In addition, for technical effects of the communication apparatus 1400, refer to the technical effects of the communication methods shown in FIG. 5a to FIG. 12A, FIG. 12B, and FIG. 12C. Details are not described herein again.

An embodiment of this application provides a communication system. The communication system includes an access network device (for example, a communication device is an access network device) and an application network element. Alternatively, the communication system includes an access network device, a terminal device (for example, a communication device is a terminal device), and an application network element. The communication system may further include an end device.

The access network device is configured to perform an action of the access network device in the foregoing method embodiments, the terminal device is configured to perform an action of the terminal device in the foregoing method embodiments, the application network element is configured to perform an action of the application network element in the foregoing method embodiments, and the end device is configured to perform an action of the end device in the foregoing method embodiments. For a specific performance method and process, refer to the foregoing method embodiments. Details are not described herein again.

An embodiment of this application provides a chip system. The chip system includes a logic circuit and an input/output port. The logic circuit may be configured to implement a processing function related to the communication method provided in embodiments of this application, and the input/output port may be configured to implement receiving and sending functions related to the communication method provided in embodiments of this application.

For example, the input port may be configured to implement a receiving function related to the communication method provided in embodiments of this application, and the output port may be configured to implement a sending function related to the communication method provided in embodiments of this application.

For example, the processor in the communication apparatus 1300 may be configured to perform, for example, but not limited to, baseband-related processing, and the transceiver in the communication apparatus 1300 may be configured to perform, for example, but not limited to, radio frequency receiving and sending. The foregoing components may be separately disposed on chips that are independent of each other, or at least some or all of the components may be disposed on a same chip. For example, the processor may be further divided into an analog baseband processor and a digital baseband processor. The analog baseband processor and the transceiver may be integrated on a same chip, and the digital baseband processor may be disposed on an independent chip. With continuous development of integrated circuit technologies, more components can be integrated on a same chip. For example, the digital baseband processor may be integrated on a same chip with a plurality of application processors (for example, but not limited to, a graphics processor and a multimedia processor). The chip may be referred to as a system-on-chip (system-on-chip). Whether components are independently disposed on different chips or are integrated and disposed on one or more chips usually depends on specific requirements of a product design. Specific implementation forms of the components are not limited in embodiments of the present invention.

In a possible design, the chip system further includes a memory, and the memory is configured to store program instructions and data for implementing functions related to the communication method provided in embodiments of this application.

The chip system may include a chip, or may include a chip and another discrete component.

An embodiment of this application provides a computer-readable storage medium. The computer-readable storage medium stores a computer program or instructions. When the computer program or the instructions are run on a computer, the communication method provided in embodiments of this application is performed.

An embodiment of this application provides a computer program product. The computer program product includes a computer program or instructions. When the computer program or the instructions are run on a computer, the communication method provided in embodiments of this application is performed.

It should be understood that, the processor in embodiments of this application may be a central processing unit (central processing unit, CPU), or the processor may be another general-purpose processor, a digital signal processor (digital signal processor, DSP), an application-specific integrated circuit (application-specific integrated circuit, ASIC), a field programmable gate array (field programmable gate array, FPGA) or another programmable logic device, a discrete gate or transistor logic device, a discrete hardware component, or the like. The general-purpose processor may be a microprocessor, or the processor may be any conventional processor or the like.

It may be understood that the memory in embodiments of this application may be a volatile memory or a nonvolatile memory, or may include a volatile memory and a nonvolatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM) and serves as an external cache. By way of example but not limitative description, random access memories (random access memories, RAMs) in many forms may be used, for example, a static random access memory (static RAM, SRAM), a dynamic random access memory (dynamic random access memory, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM).

The foregoing embodiments may be wholly or partially implemented by using software, hardware (for example, a circuit), firmware, or any combination thereof. When the software is used to implement the embodiments, the foregoing embodiments may be wholly or partially implemented in a form of a computer program product. The computer program product includes one or more computer instructions or computer programs. When the computer instructions or the computer programs are loaded or executed on a computer, the procedures or functions according to embodiments of this application are wholly or partially generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, infrared, radio, or microwave) manner. The computer-readable storage medium may be any usable medium accessible by a computer, or a data storage device, for example, a server or a data center, integrating one or more usable media. The usable medium may be a magnetic medium (for example, a floppy disk, a hard disk, or a magnetic tape), an optical medium (for example, a DVD), or a semiconductor medium. The semiconductor medium may be a solid-state drive.

It should be understood that the term "and/or" in this specification describes only an association relationship between associated objects and represents that three relationships may exist. For example, A and/or B may represent the following three cases: only A exists, both A and B exist, and only B exists. A and B may be singular or plural. In addition, the character "/" in this specification usually indicates an "or" relationship between the associated objects, or may indicate an "and/or" relationship. For details, refer to the context for understanding.

In this application, "at least one" means one or more, and "a plurality of" means two or more. "At least one of the following items (pieces)" or a similar expression thereof refers to any combination of these items, including any combination of singular items (pieces) or plural items (pieces). For example, at least one of a, b, or c may indicate: a, b, c, a-b, a-c, b-c, or a-b-c, where a, b, and c may be singular or plural.

It should be understood that sequence numbers of the foregoing processes do not mean execution sequences in various embodiments of this application. The execution sequences of the processes should be determined based on functions and internal logic of the processes, and should not be construed as any limitation on the implementation processes of embodiments of this application.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraints of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus, and method may be implemented in another manner. For example, the described apparatus embodiment is merely an example. For example, division into the units is merely logical function division and there may be another division manner during actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in an electronic form, a mechanical form, or another form.

The units described as separate parts may or may not be physically separate, and parts displayed as units may or may not be physical units, may be located in one position, or may be distributed on a plurality of network units. Some or all of the units may be selected based on an actual requirement to achieve the objectives of the solutions of embodiments.

In addition, functional units in embodiments of this application may be integrated into one processing unit, or each of the units may exist alone physically, or two or more units may be integrated into one unit.

When the functions are implemented in a form of a software functional unit and sold or used as an independent product, the functions may be stored in a computer-readable storage medium. Based on such an understanding, the technical solutions of this application essentially, or the part contributing to the prior art, or some of the technical solutions may be implemented in a form of a software product. The computer software product is stored in a storage medium, and includes several instructions for instructing a computer device (which may be a personal computer, a server, a network device, or the like) to perform all or some of the steps of the methods described in embodiments of this application. The foregoing storage medium includes any medium that can store program code, for example, a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A communication method, comprising:
determining, by a communication device, a time offset value based on scheduling and orchestration information and time of arrival, wherein the scheduling and orchestration information indicates a scheduling moment, the time of arrival indicates a moment at which a first data packet in a service flow arrives at the communication device, and the time offset value is a difference between the moment at which the first data packet arrives at the communication device and the scheduling moment; and
sending, by the communication device, the time offset value to an application network element.

2. The communication method according to claim 1, wherein the time of arrival is received by the communication device from the application network element.

3. The communication method according to claim 1, wherein the time of arrival is determined by the communication device based on the moment at which the first data packet arrives at the communication device.

4. The communication method according to claim 1, wherein the communication device is an access network device, and the time of arrival is received by the access network device from a terminal device.

5. The communication method according to any one of claims 1 to 4, wherein the communication device is an access network device, the scheduling and orchestration information is determined by the access network device based on parameter information, the parameter information comprises a service periodicity and/or service flow time of arrival, and the service flow time of arrival indicates a moment at which a second data packet in the service flow arrives at the communication device.

6. The communication method according to claim 5, wherein that the scheduling and orchestration information is determined by the access network device based on parameter information comprises:
the scheduling and orchestration information is determined by the access network device based on parameter information corresponding to at least two service flows.

7. The communication method according to claim 6, wherein the at least two service flows comprise a first service flow and a second service flow, a difference between service flow time of arrival corresponding to the first service flow and service flow time of arrival corresponding to the second service flow is less than or equal to a first threshold, and a scheduling moment corresponding to the first service flow and a scheduling moment corresponding to the second service flow are greater than or equal to a second threshold.

8. The communication method according to any one of claims 4 to 7, wherein the method further comprises:
receiving, by the access network device, the parameter information from the application network element.

9. The communication method according to any one of claims 1 to 8, wherein the communication device is an access network device, and the method further comprises:
allocating, by the access network device, a resource based on the scheduling and orchestration information.

10. The communication method according to any one of claims 1 to 3, wherein the communication device is a terminal device, and the method further comprises:
receiving, by the terminal device, the scheduling and orchestration information from an access network device.

11. The communication method according to any one of claims 1 to 10, wherein the method further comprises:
receiving, by the communication device, updated parameter information from the application network element, wherein the updated parameter information comprises: updated service flow time of arrival and/or effective time of the updated service flow time of arrival.

12. The communication method according to claim 11, wherein the updated service flow time of arrival comprises updated uplink service flow time of arrival, the communication device is an access network device, and the method further comprises:
determining, by the access network device, downlink service flow time of arrival based on the updated uplink service flow time of arrival.

13. The communication method according to any one of claims 1 to 12, wherein the sending, by the communication device, the time offset value to an application network element comprises:
when the time offset value is greater than a third threshold, sending, by the communication device, the time offset value to the application network element.

14. A communication method, comprising:
receiving, by an access network device, a time offset value from a terminal device, wherein the time offset value is a difference between a moment at which a first data packet in a service flow arrives at the terminal device and a scheduling moment; and
sending, by the access network device, the time offset value to an application network element.

15. The communication method according to claim 14, wherein the method further comprises:
determining, by the access network device, scheduling and orchestration information based on parameter information, wherein the parameter information comprises a service periodicity and/or service flow time of arrival, the service flow time of arrival indicates a moment at which a second data packet in the service flow arrives at the terminal device, and the scheduling and orchestration information indicates the scheduling moment.

16. The communication method according to claim 15, wherein the determining, by the access network device, scheduling and orchestration information based on parameter information comprises:
determining, by the access network device based on parameter information respectively corresponding to at least two service flows, scheduling and orchestration information respectively corresponding to the at least two service flows.

17. A communication method, comprising:
receiving, by an application network element, a time offset value from a communication device, wherein the time offset value is a difference between a moment at which a first data packet in a service flow arrives at the communication device and a scheduling moment; and
determining, by the application network element, a packet sending moment based on the time offset value, wherein the packet sending moment indicates a sending moment of a third data packet in the service flow; or
sending, by the application network element, the time offset value.

18. The communication method according to claim 17, wherein the method further comprises:
sending, by the application network element, updated parameter information to the communication device, wherein the updated parameter information comprises: updated service flow time of arrival and/or effective time of the updated service flow time of arrival, and the updated service flow time of arrival indicates an updated moment at which a second data packet in the service flow arrives at the communication device.

19. The communication method according to claim 17 or 18, wherein the method further comprises:
sending, by the application network element, parameter information to the communication device, wherein the parameter information comprises a service periodicity and/or service flow time of arrival, and the service flow time of arrival indicates a moment at which the second data packet in the service flow arrives at the communication device.

20. The communication method according to claim 19, wherein the method further comprises:
receiving, by the application network element, the parameter information from an end device.

21. The communication method according to any one of claims 17 to 20, wherein the method further comprises:
receiving, by the application network element, a notification message from the end device, wherein the notification message indicates whether the packet sending moment is successfully determined.

22. The communication method according to claim 21, wherein the notification message comprises packet sending effective time, and the packet sending effective time indicates effective time of the packet sending moment.

23. A communication method, comprising:
receiving, by an end device, a time offset value from an application network element, wherein the time offset value is a difference between a moment at which a first data packet in a service flow arrives at a communication device and a scheduling moment; and
determining, by the end device, a packet sending moment based on the time offset value, wherein the packet sending moment indicates a sending moment of a third data packet in the service flow.

24. The communication method according to claim 23, wherein the method further comprises:
sending, by the end device, a notification message to the application network element, wherein the notification message indicates whether the packet sending moment is successfully determined.

25. The communication method according to claim 24, wherein the notification message comprises packet sending effective time, and the packet sending effective time indicates effective time of the packet sending moment.

26. The communication method according to any one of claims 23 to 25, wherein the method further comprises:
sending, by the end device, the third data packet based on the packet sending moment.

27. The communication method according to any one of claims 23 to 26, wherein the method further comprises:
sending, by the end device, parameter information to the application network element, wherein the parameter information comprises a service periodicity and/or service flow time of arrival, and the service flow time of arrival indicates a moment at which a second data packet in the service flow arrives at the communication device.

28. A communication apparatus, wherein the communication apparatus comprises a unit or a module configured to perform the method according to any one of claims 1 to 27.

29. A computer-readable storage medium, wherein the computer-readable storage medium stores a computer program or instructions; and when the computer program or the instructions are run on a computer, the communication method according to any one of claims 1 to 27 is performed.
